# EUROPEAN PATENT APPLICATION

(11) **EP 4 329 007 A1**
(43) Date of publication of application: **28.02.2024**
(21) Application number: 22791354.8
(22) Date of filing: 18.02.2022
(51) Int. Cl.: H01M 4/38, H01M 4/13, H01M 4/134, H01M 4/36, H01M 4/40, H01M 4/66, H01M 10/052, H01M 10/0567, H01M 10/0569

(54) **BATTERY**

(30) Priority: 20.04.2021 JP 2021071462; 28.05.2021 JP 2021090669; 09.11.2021 JP 2021182584
(71) Applicant: Panasonic Intellectual Property Management Co., Ltd., Kadoma-shi, Osaka 571-0057 (JP)
(72) Inventor: FUJIMOTO, Masahisa, Kadoma-shi, Osaka 571-0057 (JP); OTO, Takashi, Kadoma-shi, Osaka 571-0057 (JP)
(74) Representative: Novagraaf International SA
(86) International application number: PCT/JP2022/006552
(87) International publication number: WO 2022/224571

(57) **Abstract**

A battery includes: a first electrode; a second electrode; and an electrolyte solution, wherein the first electrode includes a current collector and an active material layer, the active material layer contains BiNi, and the BiNi has a crystal structure, a space group of the crystal structure belonging to C2/m.

## Description

### TECHNICAL FIELD

The present disclosure relates to a battery.

### BACKGROUND ART

In lithium secondary batteries that have been actively researched and developed in recent years, battery characteristics such as charge-discharge voltage, charge-discharge cycle life characteristics, and storage characteristics largely depend on an electrode to be used. Thus, an attempt to improve battery characteristics has been made by improving an electrode active material.

For example, lithium secondary batteries produced by using, as an electrode, aluminum, silicon, tin, or the like that is electrochemically alloyed with lithium during charging have been proposed for a long time. PTL 1 discloses a lithium secondary battery including: a negative electrode containing a negative electrode material containing an alloy of silicon, tin, and a transition metal; a positive electrode; and an electrolyte.

PTL 2 discloses a lithium secondary battery including: a negative electrode produced by using a silicon thin film provided on a current collector as an active material; a positive electrode; and an electrolyte.

As the metal to be alloyed with lithium, bismuth (Bi) is exemplified. NPL 1 discloses a negative electrode prepared using a Bi powder and containing Bi as a negative electrode active material.

### Citation List

### Patent Literature

PTL 1: Japanese Patent No. 4898737
PTL 2: Japanese Patent No. 3733065

### Non-Patent Literature

NPL 1: Hiroyuki Yamaguchi, "Amorphous Polymeric Anode Materials from Poly(acrylic acid) and Metal Oxide for Lithium Ion Batteries", Mie University, Doctoral Dissertation, 2015

### SUMMARY OF THE INVENTION

### Technical problem

The present disclosure provides a battery having improved cycle characteristics.

### Solution to problem

A battery of the present disclosure includes:
a first electrode;
a second electrode; and
an electrolyte solution,
wherein the first electrode includes a current collector and an active material layer,
the active material layer contains BiNi, and
the BiNi has a crystal structure, a space group of the crystal structure belonging to C2/m.

### Advantageous effect of invention

According to the present disclosure, a battery having improved cycle characteristics can be provided.

### BRIEF DESCRIPTION OF THE DRAWINGS

Fig. 1 is a cross-sectional view schematically illustrating a configuration example of a battery according to an exemplary embodiment of the present disclosure.
Fig. 2 is a graph showing an example of an X-ray diffraction pattern of an active material layer formed of a BiNi thin film, prepared on a nickel foil.
Fig. 3A is a graph showing the result of an initial charge-discharge test of a test cell according to Example 1-1.
Fig. 3B is a graph showing the result of a second charge-discharge test of the test cell according to Example 1-1.
Fig. 4A is a graph showing the result of an initial charge-discharge test of a test cell according to Example 1-2.
Fig. 4B is a graph showing the result of a second charge-discharge test of the test cell according to Example 1-2.
Fig. 5A is a graph showing the result of an initial charge-discharge test of a test cell according to Example 1-3.
Fig. 5B is a graph showing the result of a second charge-discharge test of the test cell according to Example 1-3.
Fig. 6A is a graph showing the result of an initial charge-discharge test of a test cell according to Example 1-4.
Fig. 6B is a graph showing the result of a second charge-discharge test of the test cell according to Example 1-4.
Fig. 7A is a graph showing the result of an initial charge-discharge test of a test cell according to Example 1-5.
Fig. 7B is a graph showing the result of a second charge-discharge test of the test cell according to Example 1-5.
Fig. 8A is a graph showing the result of an initial charge-discharge test of a test cell according to Example 1-6.
Fig. 8B is a graph showing the result of a second charge-discharge test of the test cell according to Example 1-6.
Fig. 9A is a graph showing the result of an initial charge-discharge test of a test cell according to Example 1-7.
Fig. 9B is a graph showing the result of a second charge-discharge test of the test cell according to Example 1-7.
Fig. 10A is a graph showing the result of an initial charge-discharge test of a test cell according to Example 1-8.
Fig. 10B is a graph showing the result of a second charge-discharge test of the test cell according to Example 1-8.
Fig. 11A is a graph showing the result of an initial charge-discharge test of a test cell according to Example 1-9.
Fig. 11B is a graph showing the result of a second charge-discharge test of the test cell according to Example 1-9.
Fig. 12A is a graph showing the result of an initial charge-discharge test of a test cell according to Example 1-10.
Fig. 12B is a graph showing the result of a second charge-discharge test of the test cell according to Example 1-10.
Fig. 13 is a graph showing the result of an initial charge-discharge test of a test cell according to Example 1-11.
Fig. 14 is a graph showing the result of an initial charge-discharge test of a test cell according to Example 1-12.
Fig. 15 is a graph showing a relationship between the number of cycles and the discharge capacity density of the test cells according to Examples 1-1 to 1-8.
Fig. 16 is a graph showing a relationship between the number of cycles and the discharge capacity density of the test cells according to Examples 1-1 to 1-4.
Fig. 17 is a graph showing a relationship between the number of cycles and the discharge capacity density of the test cells according to Examples 1-1 and 1-9.
Fig. 18 is a graph showing a relationship between the number of cycles and the discharge capacity density of the test cell according to Example 1-10.
Fig. 19 is a graph showing a relationship between the number of cycles and the discharge capacity density of the test cells according to Examples 1-11 and 1-12.
Fig. 20 is a graph showing an X-ray diffraction pattern of an active material layer formed of a BiNi thin film prepared on a nickel foil in Example 2.
Fig. 21A is a graph showing the result of an initial charge-discharge test of a test cell according to Example 2.
Fig. 21B is a graph showing the result of a second charge-discharge test of the test cell according to Example 2.
Fig. 22 is a graph showing a relationship between the number of cycles and the discharge capacity density of the test cell according to Example 2 and a test cell according to Example 3.
Fig. 23 is a graph showing an X-ray diffraction pattern of an active material layer formed of a BiNi thin film prepared on a nickel foil in Example 3.
Fig. 24A is a graph showing the result of an initial charge-discharge test of the test cell according to Example 3.
Fig. 24B is a graph showing the result of a second charge-discharge test of the test cell according to Example 3.
Fig. 25 is a graph showing an example of X-ray diffraction patterns of an active material layer before charging, after charging, and after discharging in the test cell according to Example 1-1.
Fig. 26 is a photograph of a first electrode in Example 1-1 after 500 cycles of charging and discharging.
Fig. 27 is a graph showing an X-ray diffraction pattern of a BiNi powder prepared from a powder material in Example 4.
Fig. 28A is a graph showing the result of an initial charge-discharge test of a test cell according to Example 4-1.
Fig. 28B is a graph showing the result of a second charge-discharge test of the test cell according to Example 4-1.
Fig. 29A is a graph showing the result of an initial charge-discharge test of a test cell according to Example 4-2.
Fig. 29B is a graph showing the result of a second charge-discharge test of the test cell according to Example 4-2.
Fig. 30 is a graph showing a relationship between the number of cycles up to 50 cycles and the discharge capacity density of the test cells according to Examples 4-1 and 4-2.
Fig. 31 is a graph showing a relationship between the number of cycles up to 10 cycles and the discharge capacity density of the test cells according to Examples 4-1 and 4-2.
Fig. 32A is a graph showing the result of an initial charge-discharge test of a test cell according to Reference Example 1.
Fig. 32B is a graph showing the result of a second charge-discharge test of the test cell according to Reference Example 1.
Fig. 33 is a graph showing a relationship between the number of cycles and the discharge capacity density of the test cell according to Reference Example 1.
Fig. 34A is a graph showing the result of an initial charge-discharge test of a test cell according to Comparative Example 1.
Fig. 34B is a graph showing the result of a second charge-discharge test of the test cell according to Comparative Example 1.
Fig. 35 is a graph showing a relationship between the number of cycles up to 10 cycles and the discharge capacity density of the test cell according to Comparative Example 1.

### DESCRIPTION OF EMBODIMENT

### (Knowledge underlying the present disclosure)

As described in the section of [BACKGROUND ART], in lithium secondary batteries, an attempt to improve battery characteristics has been made by improving an electrode active material.

When lithium metal is used as a negative electrode active material, a lithium secondary battery having high energy density per weight and volume is obtained. However, in the lithium secondary battery having such a configuration, lithium is deposited in a dendrite shape during charging. Since a part of the deposited lithium metal reacts with an electrolyte solution, there is a problem in that charge-discharge efficiency is low and cycle characteristics are poor.

To address the problem, use of carbon, particularly, use of graphite as a negative electrode has been proposed. In the negative electrode including carbon, charging and discharging are performed by insertion and deinsertion of lithium into and from carbon. In the negative electrode having such a configuration, lithium metal is not deposited in a dendrite shape in the charge-discharge mechanism. In addition, the lithium secondary battery which employs the negative electrode having such a configuration involves a topotactic reaction and thus has very good reversibility, and exhibits almost 100% of charge-discharge efficiency. For these reasons, a lithium secondary battery employing a negative electrode including carbon, particularly graphite, has been put into practical use. However, the theoretical capacity density of graphite is 372 mAh/g, which is about 1/10 of the theoretical capacity density of lithium metal of 3,884 mAh/g. Therefore, the capacity density of the active material of the negative electrode including graphite is low. Furthermore, since the actual capacity density of graphite has reached almost the theoretical capacity density, an increase in capacity of the negative electrode including graphite has reached a limit.

On the other hand, lithium secondary batteries produced by using, as an electrode, aluminum, silicon, tin, or the like that is electrochemically alloyed with lithium during charging have been proposed for a long time. The capacity density of the metal to be alloyed with lithium is much larger than the capacity density of graphite. In particular, the theoretical capacity density of silicon is large. Therefore, an electrode produced by using aluminum, silicon, tin, or the like to be alloyed with lithium is promising as a negative electrode for a battery exhibiting high capacity, and various secondary batteries including such an electrode as a negative electrode have been proposed (PTL 1).

However, the negative electrode produced by using the metal to be alloyed with lithium as described above expands when absorbing lithium and contracts when releasing lithium. When such expansion and contraction are repeated in charging and discharging, the alloy itself as an electrode active material is pulverized due to charging and discharging, and the current collecting characteristics of the negative electrode are deteriorated. As a result, sufficient cycle characteristics are not obtained. In order to remedy such drawbacks, the following several attempts have been made. For example, attempts have been made to deposit silicon on a current collector having a roughened surface by sputtering or vapor deposition, or to deposit tin on the current collector by electroplating (PTL 2). In these attempts, the active material, that is, the metal to be alloyed with lithium becomes a thin film to be in close contact with the current collector. Therefore, even when the negative electrode repeatedly expands and contracts due to absorption and release of lithium, the current collecting property is hardly deteriorated.

However, when a layer of the active material is formed by sputtering or vapor deposition as described above, the production cost is high, which is not practical. It is practical to form a layer of the active material by electroplating at low production cost, but it is very difficult to perform electroplating with silicon. In addition, tin with which electroplating is easily performed has a problem of having poor discharge flatness, and thus is difficult to use as an electrode of a battery.

As the metal to be alloyed with lithium, bismuth (Bi) is also exemplified. Bi constitutes, together with lithium (Li), compounds of LiBi and Li₃Bi. There is almost no difference between the potential of LiBi and the potential of Li₃Bi. On the other hand, there are several compounds constituted of tin having poor discharge flatness and lithium, and the potentials of such compounds are considerably different from each other. That is, unlike tin, Bi does not have a property that the potential is greatly different among a plurality of types of compounds formed by combination with lithium. For this reason, an electrode containing Bi as an active material has a flat potential and thus is excellent in discharge flatness. Therefore, an electrode containing Bi as an active material is considered to be suitable as an electrode of a battery.

However, Bi is poor in malleability and ductility, and is difficult to produce in the form of a metal plate or a metal foil, and the obtainable form is a small ball or a powder. Therefore, an electrode produced by applying a Bi powder onto a current collector has been studied as an electrode containing Bi as an active material. However, an electrode produced using such a Bi powder is pulverized due to repeated charging and discharging, and current collecting characteristics are deteriorated. As a result, sufficient cycle characteristics are not obtained. For example, in NPL 1, an electrode containing Bi as an active material is prepared by using a Bi powder and using polyvinylidene fluoride (PVdF) or polyimide (PI) as a binder. In NPL 1, a battery prepared using this electrode is charged and discharged. However, the results of an initial charge-discharge curve and cycle characteristics of the prepared electrode are both very poor. Although the measurement is performed at a very low rate equivalent to 0.042 C, initial charge-discharge efficiency is low, and cycle degradation is severe, which are not practical. For the cycle degradation, NPL 1 states that it is considered that as the Bi active material expands at the time of Li insertion, and contracts at the time of Li desorption, the active material becomes finer, and as a result, an electron conduction path cannot be secured, and decrease in the capacity occurs.

The present inventors have focused on Bi not having a property that the potential is greatly different among a plurality of types of compounds formed with lithium, and excellent in discharge flatness as described above, and have intensively studied a battery capable of improving cycle characteristics. As a result, the present inventors have found a new technical idea that the cycle characteristics of a battery are improved when BiNi having a specific crystal structure, specifically, in which the crystal structure thereof belongs to C2/m is used as an active material, and have completed the present disclosure.

### (Overview of one aspect according to the present disclosure)

A battery of a first aspect of the present disclosure includes:
a first electrode;
a second electrode; and
an electrolyte solution,
wherein the first electrode includes a current collector and an active material layer,
the active material layer contains BiNi, and
the BiNi has a crystal structure, a space group of the crystal structure belonging to C2/m.

The battery according to the first aspect includes the electrode containing, as an active material, the BiNi having the crystal structure in which the space group thereof belongs to C2/m. Therefore, the battery according to the first aspect has improved cycle characteristics.

In a second aspect of the present disclosure, for example, in the battery according to the first aspect, in an X-ray diffraction pattern of the active material layer, obtained by surface X-ray diffraction measurement using a Cu-Kα ray, an intensity ratio I(2)/I(1) of an intensity I(2) to an intensity I(1) may be less than or equal to 0.28, where the intensity I(1) is a height intensity of a maximum peak present in a range of a diffraction angle 2θ of from 29° to 31°, inclusive, and the intensity I(2) is a height intensity of a maximum peak present in a range of a diffraction angle 2θ of from 41° to 43°, inclusive.

The battery according to the second aspect has high initial efficiency and improved cycle characteristics.

In a third aspect of the present disclosure, for example, in the battery according to the first or second aspect, the active material layer may contain at least one selected from the group consisting of LiBi and Li₃Bi.

The battery according to the third aspect has a more enhanced capacity and improved cycle characteristics.

In a fourth aspect of the present disclosure, for example, in the battery according to any one of the first to third aspects, the active material layer need not contain a solid electrolyte.

According to the fourth aspect, a battery having a higher capacity per volume and improved cycle characteristics is obtained.

In a fifth aspect of the present disclosure, for example, in the battery according to any one of the first to fourth aspects, the active material layer may contain the BiNi as a main component of an active material.

According to the fifth aspect, a more enhanced capacity and improved cycle characteristics are obtained.

In a sixth aspect of the present disclosure, for example, in the battery according to the fifth aspect, the active material layer may contain substantially only the BiNi as an active material.

According to the sixth aspect, a more enhanced capacity and improved cycle characteristics are obtained.

In a seventh aspect of the present disclosure, for example, in the battery according to any one of the first to sixth aspects, the current collector may contain Ni.

The battery according to the seventh aspect has a more enhanced capacity and improved cycle characteristics.

In an eighth aspect of the present disclosure, for example, in the battery according to any one of the first to seventh aspects, the active material layer may be a heat-treated plating layer.

According to the eighth aspect, a battery having a higher capacity per volume and improved cycle characteristics is obtained.

In a ninth aspect of the present disclosure, for example, in the battery according to any one of the first to eighth aspects, the electrolyte solution may contain an aprotic solvent and a lithium salt dissolved in the aprotic solvent.

The battery according to the ninth aspect can achieve a lithium ion battery having an enhanced capacity and improved cycle characteristics.

In a tenth aspect of the present disclosure, for example, in the battery according to the ninth aspect, the aprotic solvent may contain at least one selected from the group consisting of vinylene carbonate, 2-methyltetrahydrofuran, fluoroethylene carbonate, and ethylene carbonate.

The battery according to the tenth aspect has a more enhanced capacity and improved cycle characteristics.

In an eleventh aspect of the present disclosure, for example, in the battery according to the ninth aspect, the aprotic solvent may contain vinylene carbonate and chain carbonate.

The battery according to the eleventh aspect has more improved cycle characteristics.

In a twelfth aspect of the present disclosure, for example, in the battery according to any one of the first to eleventh aspects, the first electrode may be a negative electrode, and the second electrode may be a positive electrode.

The battery according to the twelfth aspect has a more enhanced capacity and improved cycle characteristics.

### (Exemplary embodiment of the present disclosure)

Hereinafter, an exemplary embodiment of the present disclosure will be described with reference to the drawings. The following description is intended to provide a comprehensive or specific example. Numerical values, compositions, shapes, film thicknesses, electrical characteristics, structures of secondary batteries, and the like shown below are merely examples, and are not intended to limit the present disclosure.

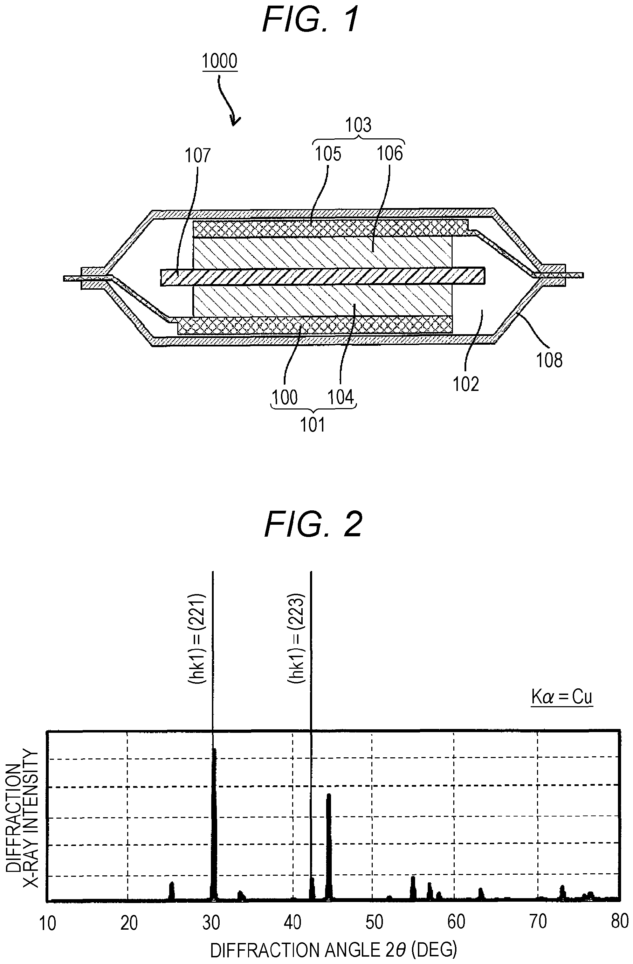

Fig. 1 is a cross-sectional view schematically illustrating a configuration example of battery 1000 according to an exemplary embodiment of the present disclosure.

Battery 1000 includes first electrode 101, second electrode 103, and electrolyte solution 102. First electrode 101 includes current collector 100 and active material layer 104. Active material layer 104 contains BiNi. This BiNi has a monoclinic crystal structure having a space group of C2/m.

Battery 1000 further includes, for example, separator 107 and exterior 108. Separator 107 is disposed between first electrode 101 and second electrode 103. First electrode 101 and second electrode 103 face each other with separator 107 interposed therebetween. First electrode 101, second electrode 103, separator 107, and electrolyte solution 102 are housed in exterior 108. Electrolyte solution 102 is, for example, an electrolyte solution with which first electrode 101, second electrode 103, and separator 107 are impregnated. The internal space of exterior 108 may be filled with electrolyte solution 102.

In battery 1000, active material layer 104 contains, as an active material, the BiNi having the monoclinic crystal structure of which the space group belongs to C2/m. Use of this BiNi as an active material solves problems of pulverization in charging and discharging of a Bi active material formed using a Bi powder and side reactions with an electrolyte solution. Therefore, reduction of an electron conduction path in active material layer 104 due to repeated charging and discharging is suppressed. As a result, battery 1000 has improved cycle characteristics.

Battery 1000 is, for example, a lithium secondary battery. Hereinafter, the features of the present technique will be described as described below by exemplifying a case where metal ions absorbed and released in active material layer 104 of first electrode 101 and second electrode 103 during charging and discharging of battery 1000 are lithium ions.

Active material layer 104 may contain BiNi as a main component. Here, "active material layer 104 contains BiNi as a main component" is defined as "the content of BiNi in active material layer 104 is more than or equal to 50 mass%". The content of BiNi in active material layer 104 can be obtained, for example, by confirming that Bi and Ni are contained in active material layer 104 by elemental analysis by energy dispersive X-ray analysis (EDX), and calculating the proportions of contained compounds by performing Rietveld analysis on the X-ray diffraction result of active material layer 104.

With the above-described configuration, improved charge-discharge cycle characteristics can be obtained.

Active material layer 104 containing the BiNi as a main component may be formed of, for example, BiNi formed in a thin film shape (hereinafter, referred to as a "BiNi thin film").

In an X-ray diffraction pattern of active material layer 104, obtained by surface X-ray diffraction measurement using Cu-Ka rays, an intensity ratio I(2)/I(1) of an intensity I(2) to an intensity I(1) may be less than or equal to 0.28, where the intensity I(1) is a height intensity of a maximum peak present in a range of a diffraction angle 2θ of from 29° to 31°, inclusive, and the intensity I(2) is a height intensity of a maximum peak present in a range of a diffraction angle 2θ of from 41° to 43°, inclusive.

Here, the maximum peak present in a range of a diffraction angle 2θ of from 29° to 31° inclusive in the X-ray diffraction pattern corresponds to a peak derived from the (2,2,1) plane of BiNi as an intermetallic compound. The maximum peak present in a range of a diffraction angle 2θ of from 41° to 43° inclusive in the X-ray diffraction pattern corresponds to a peak derived from the (2,2,3) plane of BiNi as an intermetallic compound. The peak intensity ratio I(2)/I(1) of less than or equal to 0.28 means that the proportion of the (2,2,3) plane relative to the (2,2,1) plane in the BiNi having a monoclinic crystal structure belonging to a space group C2/m is low on the surface of active material layer 104. That is, the peak intensity ratio I(2)/I(1) of less than or equal to 0.28 means that the orientation of the (2,2,1) plane is stronger on the surface of active material layer 104. Active material layer 104 having such orientation in the crystal structure of the BiNi on the surface thereof can have high adhesion to current collector 100. Therefore, since active material layer 104 has such surface orientation, deterioration of the current collecting property hardly occurs even when active material layer 104 repeatedly expands and contracts due to charging and discharging. Accordingly, battery 1000 of the present disclosure can have more improved cycle characteristics and a higher capacity.

The X-ray diffraction pattern of active material layer 104 can be obtained by X-ray diffraction measurement by a θ-2θ method using Cu-Kα rays having wavelengths of 1.5405 Å and 1.5444 Å, that is, wavelengths of 0.15405 nm and 0.15444 nm.

The diffraction angle of the peak in the X-ray diffraction pattern is defined as an angle indicating the maximum intensity of a convex portion at which the value of an SN ratio (that is, the ratio of a signal S to background noise N) is more than or equal to 1.3 and the full width at half maximum is less than or equal to 10°. The full width at half maximum is a width represented by a difference between two diffraction angles, and a width at which the intensity of the X-ray diffraction peak is a half value of I_{MAX}, assuming that the maximum intensity of the X-ray diffraction peak is I_{MAX}.

Active material layer 104 that contains the BiNi as a main component and is formed of the BiNi thin film satisfying the above surface orientation can be prepared by, for example, electroplating. A method for producing first electrode 101 by preparing active material layer 104 by electroplating is, for example, as follows.

First, a base material for electroplating is prepared. In first electrode 101, for example, current collector 100 serves as a base material. For example, a current collector containing Ni is prepared as current collector 100. The method for producing first electrode 101 includes, for example, preparing a Bi plating layer on the current collector containing Ni by an electroplating method, and heating the current collector and the Bi plating layer to diffuse Ni contained in the current collector into the Bi plating layer, thereby obtaining an electrode in which an active material layer containing BiNi is formed on the current collector. The heating temperature of the current collector and the Bi plating layer may be, for example, more than or equal to 250°C, and may be more than or equal to 350°C.

The method for producing first electrode 101 will be described more specifically.

First, a base material for electroplating is prepared. In first electrode 101, for example, current collector 100 serves as a base material. As an example, a nickel foil is prepared as current collector 100. The nickel foil is preliminarily degreased with an organic solvent, and then one surface of the foil is masked. The foil is immersed in an acidic solvent to perform degreasing, thereby activating the surface of the nickel foil. The activated nickel foil is connected to a power source so that a current can be applied thereto. The nickel foil connected to the power source is immersed in a bismuth plating bath. As the bismuth plating bath, for example, an organic acid bath containing Bi³⁺ ions and an organic acid is used. Thereafter, the unmasked part of the nickel foil surface is electroplated with Bi by applying a current to the nickel foil with the current density and the application time being controlled. After the electroplating, the nickel foil is recovered from the plating bath, the masking is removed, and the nickel foil is washed with pure water and dried. By this method, a Bi plating layer is prepared on the nickel foil surface. Note that the bismuth plating bath used for preparing the Bi plating layer is not particularly limited, and can be appropriately selected from known bismuth plating baths capable of depositing a Bi simple substance thin film. In the bismuth plating bath, an organic sulfonic acid bath, a gluconic acid and ethylenediaminetetraacetic acid (EDTA) bath, or a citric acid and EDTA bath can be used as the organic acid bath. For example, a sulfuric acid bath may be used as the bismuth plating bath. An additive may be added to the bismuth plating bath.

Here, the target thickness of the Bi plating layer prepared by electroplating Bi and the actually obtained thickness of the Bi plating layer are shown in Table 1.

Samples of the Bi plating layer were prepared in the same manner as in Example 1, which will be described later. However, the samples were prepared by adjusting the application time of the current to the nickel foil as the plating base material so as to achieve a plating thickness of 5 µm. The thickness of the resulting Bi plating layer was measured with an X-ray fluorescence device SEA6000VX manufactured by Seiko Instruments Inc. The average thicknesses of the Bi layers in the five samples were 5.7 µm, 5.1 µm, 5.1 µm, 5.7 µm, and 5.8 µm.

**[Table 1]**

| | Target thickness: 5 µm | | | | |
|---|---|---|---|---|---|
| Sample No. | 1 | 2 | 3 | 4 | 5 |
| Plating thickness µm | 5.7 | 5.1 | 5.1 | 5.7 | 5.8 |

Next, the nickel foil and the Bi plating layer prepared on the nickel foil are heated. By this heat treatment, Ni is diffused in solid phase from the nickel foil to the Bi plating layer, and an active material layer formed of a BiNi thin film can be prepared. Here, a sample in which Bi is electroplated on the nickel foil is subjected to, for example, the heat treatment at a temperature of more than or equal to 250°C for more than or equal to 30 minutes and less than 100 hours in a non-oxidizing atmosphere, whereby Ni is diffused in solid phase from the nickel foil to the Bi plating layer, and an active material layer formed of a BiNi thin film can be prepared.

For the above sample obtained by electroplating Bi on the nickel foil so as to achieve the thickness of 5 µm, the heat treatment was performed at a temperature of 400°C for 60 hours in an argon atmosphere to prepare an active material layer formed of a BiNi thin film. In addition, the structure of the surface of the prepared active material layer formed of the BiNi thin film was also analyzed by the surface X-ray diffraction measurement.

Fig. 2 is a graph showing an example of an X-ray diffraction pattern of the active material layer formed of the BiNi thin film prepared on the nickel foil. The X-ray diffraction pattern was measured by the θ-2θ method using Cu-Ka rays having wavelengths of 1.5405 Å and 1.5444 Å as X-rays from the surface of the active material layer, that is, the thickness direction of active material layer 104, by use of an X-ray diffractometer (MiNi Flex, manufactured by Rigaku Corporation). From the X-ray diffraction pattern shown in Fig. 2, the phases of BiNi having a space group belonging to C2/m as a crystal structure, and Ni contained in the nickel foil as the current collector and the active material layer were identified. The X-ray diffraction pattern shown in Fig. 2 is an X-ray diffraction pattern obtained by the surface X-ray diffraction measurement of an active material layer in a first electrode prepared in Example 1, which will be described later.

In the X-ray diffraction pattern of the active material layer, obtained by the surface X-ray diffraction measurement using Cu-Ka rays, as illustrated in Fig. 2, a peak intensity ratio I(2)/I(1) of an intensity I(2) to an intensity I(1) was less than or equal to 0.28, where the intensity I(1) was a height intensity of a maximum peak present in a range of a diffraction angle 2θ of from 29° to 31°, inclusive, and the intensity I(2) was a height intensity of a maximum peak present in a range of a diffraction angle 2θ of from 41° to 43°, inclusive.

From the result of the X-ray diffraction pattern described above, it was confirmed that the proportion of the (2,2,3) plane relative to the (2,2,1) plane of BiNi having a monoclinic crystal structure in which the space group thereof belongs to C2/m was low on the surface of active material layer 104 prepared by electroplating Bi on current collector 100 containing Ni to prepare the Bi plating layer and further heating the Bi plating layer on current collector 100 together with current collector 100. That is, it was confirmed that the orientation of the (2,2,1) plane was strong on the surface of active material layer 104. From this, it has been found that the (2,2,1) plane of the BiNi having the monoclinic crystal structure in which the space group thereof belongs to C2/m can be oriented to be a surface by preparing the Bi plating layer on the current collector containing Ni, and performing the heat treatment on the obtained Bi plating layer on the current collector containing Ni. An electrode in which the BiNi thin film having such orientation is provided as the active material layer can further improve the cycle characteristics of the battery.

Hereinafter, each configuration of battery 1000 of the present exemplary embodiment will be described in more detail by exemplifying a case where first electrode 101 is a negative electrode and second electrode 103 is a positive electrode.

### [First electrode]

As described above, first electrode 101 includes current collector 100 and active material layer 104. The configuration of active material layer 104 is as described above. First electrode 101 functions as a negative electrode. Therefore, active material layer 104 contains a negative electrode active material having a property of absorbing and releasing lithium ions. Active material layer 104 contains the BiNi having the crystal structure in which the space group thereof belongs to C2/m, and this BiNi functions as the negative electrode active material. Active material layer 104 contains the BiNi as the active material.

Bi is a metal element that is alloyed with lithium. On the other hand, since Ni is not alloyed with lithium, it is presumed that the load on the crystal structure of the negative electrode active material is reduced at the time of desorption and insertion of lithium atoms associated with charging and discharging, and a decrease in the capacity retention rate of the battery is suppressed in an alloy containing Ni. When the BiNi functions as the negative electrode active material, Bi forms an alloy with lithium during charging, to thereby absorb lithium therein. That is, in active material layer 104, a lithium bismuth alloy is produced during charging of battery 1000. The lithium bismuth alloy to be produced contains, for example, at least one selected from the group consisting of LiBi and Li₃Bi. That is, during charging of battery 1000, active material layer 104 contains, for example, at least one selected from the group consisting of LiBi and Li₃Bi. During discharging of battery 1000, lithium is released from the lithium bismuth alloy, and the lithium bismuth alloy returns to BiNi.

The BiNi as the negative electrode active material reacts during charging and discharging of battery 1000, for example, as follows. The following reaction is an example of a case where the lithium bismuth alloy produced during charging is Li₃Bi.
Charge:

   BiNi + 3Li⁺ + 3e' → Li₃Bi + Ni
Discharge:

   Li₃Bi + Ni → BiNi + 3Li⁺ + 3e'

Active material layer 104 may contain substantially only the BiNi as the active material. In this case, battery 1000 can have an enhanced capacity and improved cycle characteristics. Note that "active material layer 104 contains substantially only the BiNi as the active material" means that, for example, in active materials contained in active material layer 104, an active material other than the BiNi is less than or equal to 1 mass%. Active material layer 104 may contain only the BiNi as the active material.

Active material layer 104 need not contain a solid electrolyte.

Active material layer 104 may be disposed in direct contact with the surface of current collector 100.

Active material layer 104 may have a thin film shape.

Active material layer 104 may be a heat-treated plating layer. Active material layer 104 may be a heat-treated plating layer provided in direct contact with the surface of current collector 100. That is, active material layer 104 may be a layer formed by performing the heat treatment on the Bi plating layer formed on current collector 100 containing Ni as described above.

When active material layer 104 is a heat-treated plating layer provided in direct contact with the surface of current collector 100, active material layer 104 is firmly in close contact with current collector 100. This makes it possible to further suppress deterioration of the current collecting characteristics of first electrode 101, the deterioration occurring when active material layer 104 repeatedly expands and contracts. Therefore, the cycle characteristics of battery 1000 are further improved. Furthermore, when active material layer 104 is a heat-treated plating layer, Bi to be alloyed with lithium is contained in active material layer 104 at a high density, so that a higher capacity can be achieved.

Active material layer 104 may contain a material other than the BiNi.

Active material layer 104 may further contain a conductive material.

Examples of the conductive material include carbon materials, metals, inorganic compounds, and conductive polymers. Examples of the carbon material include graphite, acetylene black, carbon black, Ketjen black, carbon whisker, needle coke, and carbon fiber. Examples of the graphite include natural graphite and artificial graphite. Examples of the natural graphite include massive graphite and flake graphite. Examples of the metal include copper, nickel, aluminum, silver, and gold. Examples of the inorganic compound include tungsten carbide, titanium carbide, tantalum carbide, molybdenum carbide, titanium boride, and titanium nitride. These materials may be used singly or in combination of two or more.

Active material layer 104 may further contain a binder.

Examples of the binder include fluorine-containing resins, thermoplastic resins, ethylene propylene diene monomer (EPDM) rubber, sulfonated EPDM rubber, and natural butyl rubber (NBR). Examples of the fluorine-containing resin include polytetrafluoroethylene (PTFE), polyvinylidene fluoride (PVdF), and fluororubber. Examples of the thermoplastic resin include polypropylene and polyethylene. These materials may be used singly or in combination of two or more.

The thickness of active material layer 104 is not particularly limited, and may be, for example, from 1 µm to 100 µm, inclusive.

The material of current collector 100 is, for example, a single metal or alloy. More specifically, the material of current collector 100 may be a single metal or alloy containing at least one selected from the group consisting of copper, chromium, nickel, titanium, platinum, gold, aluminum, tungsten, iron, and molybdenum. Current collector 100 may be stainless steel.

Current collector 100 may contain nickel (Ni).

Current collector 100 may have a plate shape or a foil shape. From the viewpoint of easily ensuring high conductivity, the negative electrode current collector may be a metal foil or a metal foil containing nickel. Examples of the metal foil containing nickel include a nickel foil and a nickel alloy foil. The content of nickel in the metal foil may be more than or equal to 50 mass%, or more than or equal to 80 mass%. In particular, the metal foil may be a nickel foil containing substantially only nickel as a metal. Current collector 100 may be obtained by forming a Ni layer such as a Ni plating layer on the surface of a metal foil formed of a metal or an alloy other than nickel.

Current collector 100 may be a layered film.

### [Electrolyte solution]

Electrolyte solution 102 contains, for example, an aprotic solvent and a lithium salt dissolved in the aprotic solvent.

The aprotic solvent is not particularly limited. Examples of the aprotic solvent include cyclic carbonate ester solvents, chain carbonate ester (chain carbonate) solvents, cyclic ether solvents, chain ether solvents, cyclic ester solvents, chain ester solvents, and fluorine solvents. Examples of the cyclic carbonate ester solvent include vinylene carbonate, fluoroethylene carbonate, ethylene carbonate, propylene carbonate, and butylene carbonate. Examples of the chain carbonate ester solvent include dimethyl carbonate, methyl ethyl carbonate, and diethyl carbonate. Examples of the cyclic ether solvent include tetrahydrofuran, 2-methyltetrahydrofuran, 1,4-dioxane, and 1,3-dioxolane. Examples of the chain ether solvent include 1,2-dimethoxyethane and 1,2-diethoxyethane. Examples of the cyclic ester solvent include γ-butyrolactone. Examples of the chain ester solvent include methyl acetate. Examples of the fluorine solvent include methyl fluoropropionate, fluorobenzene, fluoroethyl methyl carbonate, and fluorodimethylene carbonate. Electrolyte solution 102 may contain one type of solvent selected from these solvents, or may contain a mixture of two or more types of non-aqueous solvents selected from these solvents.

Electrolyte solution 102 may contain at least one selected from the group consisting of vinylene carbonate, 2-methyltetrahydrofuran, fluoroethylene carbonate, and ethylene carbonate as the aprotic solvent. Since electrolyte solution 102 contains these solvents, battery 1000 has more improved cycle characteristics.

Electrolyte solution 102 may contain vinylene carbonate and chain carbonate as the aprotic solvent. Since electrolyte solution 102 contains a solvent mixture containing vinylene carbonate and chain carbonate, battery 1000 has more improved cycle characteristics.

The chain carbonate is not particularly limited. Examples of the chain carbonate include dimethyl carbonate, methyl ethyl carbonate, and diethyl carbonate.

When the aprotic solvent in electrolyte solution 102 contains a solvent mixture containing vinylene carbonate and chain carbonate, the proportions of the vinylene carbonate and the chain carbonate are not particularly limited. For example, the ratio of the chain carbonate to the vinylene carbonate (chain carbonate/vinylene carbonate) may be more than 0 and less than or equal to 99 in terms of volume ratio.

The aprotic solvent contained in electrolyte solution 102 may contain only the vinylene carbonate and the chain carbonate. That is, the proportion of the total mass of the vinylene carbonate and the chain carbonate in the total mass of the non-aqueous solvent may be, for example, 100 mass%.

When the aprotic solvent in electrolyte solution 102 contains a solvent mixture containing vinylene carbonate and chain carbonate, electrolyte solution 102 may further contain other aprotic solvents than the vinylene carbonate and the chain carbonate. In this case, the proportion of the total mass of the other aprotic solvents is, for example, less than or equal to 10 mass%. Examples of the other aprotic solvents include cyclic carbonate solvents, cyclic ether solvents, chain ether solvents, cyclic ester solvents, chain ester solvents, and fluorine solvents. Examples of the cyclic carbonate solvent include fluoroethylene carbonate, ethylene carbonate, propylene carbonate, and butylene carbonate. Examples of the cyclic ether solvent include tetrahydrofuran, 2-methyltetrahydrofuran, 1,4-dioxane, and 1,3-dioxolane. Examples of the chain ether solvent include 1,2-dimethoxyethane and 1,2-diethoxyethane. Examples of the cyclic ester solvent include γ-butyrolactone. Examples of the chain ester solvent include methyl acetate. Examples of the fluorine solvent include methyl fluoropropionate, fluorobenzene, fluoroethyl methyl carbonate, and fluorodimethylene carbonate.

Examples of the lithium salt include LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), and LiC(SO₂CF₃)₃. One type of lithium salt selected from these may be used singly. Alternatively, a mixture of two or more types of lithium salts selected from these may be used.

### [Second electrode]

Second electrode 103 functions as a positive electrode. Second electrode 103 contains a material capable of absorbing and releasing metal ions such as lithium ions. The material is, for example, a positive electrode active material.

Second electrode 103 may include current collector 105 and active material layer 106. Active material layer 106 contains a positive electrode active material.

Active material layer 106 may be disposed on the surface of current collector 105 in direct contact with current collector 105.

As the positive electrode active material, for example, a lithium-containing transition metal oxide, a transition metal fluoride, a polyanion material, a fluorinated polyanion material, a transition metal sulfide, a transition metal oxysulfide, a transition metal oxynitride, or the like can be used. Examples of the lithium-containing transition metal oxide include LiNi_{i-x-y}CoₓAl_{y}O₂((x + y) < 1), LiNi_{1-x-y}CoₓMn_{y}O₂((x + y) < 1), and LiCoO₂. In particular, when the lithium-containing transition metal oxide is used as the positive electrode active material, the production cost of the electrode can be reduced, and the average discharge voltage of the battery can be increased. The positive electrode active material may contain, for example, Li(Ni,Co,Mn)O₂.

Examples of the material of current collector 105 include metal materials. Examples of the metal material include copper, stainless steel, iron, and aluminum.

Second electrode 103 may contain a solid electrolyte. As the solid electrolyte, a known solid electrolyte used for a lithium secondary battery can be used. For example, a halide solid electrolyte, a sulfide solid electrolyte, an oxide solid electrolyte, a polymer solid electrolyte, or a complex hydride solid electrolyte may be used.

The halide solid electrolyte means a solid electrolyte containing a halogen element. The halide solid electrolyte may contain not only a halogen element but also oxygen. The halide solid electrolyte contains no sulfur (S).

The halide solid electrolyte may be, for example, a material represented by the following compositional formula (1).

Li_{α}M_{β}X_{γ} Formula (1)

where α, β, and γ are values larger than 0, M is at least one selected from the group consisting of metal elements other than Li and metalloid elements, and X is at least one selected from the group consisting of F, Cl, Br, and I.

The "metalloid element" is B, Si, Ge, As, Sb, and Te.

The "metal element" refers to all elements included in Groups 1 to 12 of the periodic table except hydrogen, and all elements included in Groups 13 to 16 except B, Si, Ge, As, Sb, Te, C, N, P, O, S, and Se. That is, the metal element is an element group that can be a cation when the element is combined with a halogen compound to form an inorganic compound.

In the compositional formula (1), M may contain Y, and X may contain Cl and Br.

The sulfide solid electrolyte means a solid electrolyte containing sulfur (S). The sulfide solid electrolyte may contain not only sulfur but also a halogen element.

As the sulfide solid electrolyte, for example, Li₂S-P₂S₅, Li₂S-SiS₂, Li₂S-B₂S₃, Li₂S-GeS₂, Li_{3.25}Ge_{0.25}P_{0.75}S₄, or Li₁₀GeP₂S₁₂ can be used.

As the oxide solid electrolyte, for example, a NASICON-type solid electrolyte typified by LiTi₂(PO₄)₃ and an element-substituted compound thereof, a (LaLi)TiO₃-based perovskite-type solid electrolyte, a LISICON-type solid electrolyte typified by Li₁₄ZnGe₄O₁₆, Li₄SiO₄, LiGeO₄ and an element-substituted compound thereof, a garnet-type solid electrolyte typified by Li₇La₃Zr₂O₁₂ and an element-substituted compound thereof, Li₃PO₄ and an N-substituted compound thereof, and glass or glass ceramics in which Li₂SO₄, Li₂CO₃, or the like is added to a Li-B-O compound as a base such as LiBO₂ and Li₃BO₃ can be used.

As the polymer solid electrolyte, for example, a compound of a polymer compound and a lithium salt can be used. The polymer compound may have an ethylene oxide structure. The polymer compound having an ethylene oxide structure can contain a large amount of lithium salt. Therefore, ionic conductivity can be increased. As the lithium salt, LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), LiC(SO₂CF₃)₃, and the like can be used. One type of lithium salt selected from the exemplified lithium salts can be used singly. Alternatively, a mixture of two or more types of lithium salts selected from the exemplified lithium salts can be used.

As the complex hydride solid electrolyte, for example, LiBH₄-LiI, LiBH₄-P₂S₅, and the like can be used.

The positive electrode active material may have a median diameter of from 0.1 µm to 100 µm, inclusive. When the positive electrode active material has a median diameter of more than or equal to 0.1 µm, the positive electrode active material and the solid electrolyte can form a good dispersion state. This improves the charge-discharge characteristics of the battery. When the positive electrode active material has a median diameter of less than or equal to 100 µm, a lithium diffusion rate is improved. This allows the battery to operate at high output power.

The positive electrode active material may have a median diameter larger than that of the solid electrolyte. As a result, the positive electrode active material and the solid electrolyte can form a good dispersion state.

From the viewpoint of the energy density and output of the battery, in second electrode 103, the ratio of the volume of the positive electrode active material to the total volume of the positive electrode active material and the solid electrolyte may be from 0.30 to 0.95, inclusive.

In order to prevent the solid electrolyte from reacting with the positive electrode active material, a coating layer may be formed on the surface of the positive electrode active material. This makes it possible to suppress an increase in reaction overvoltage of the battery. Examples of a coating material contained in the coating layer include sulfide solid electrolytes, oxide solid electrolytes, and halide solid electrolytes.

The thickness of second electrode 103 may be from 10 µm to 500 µm, inclusive. When the thickness of second electrode 103 is more than or equal to 10 µm, a sufficient energy density of the battery can be ensured. When the thickness of second electrode 103 is less than or equal to 500 µm, the battery can operate at high output power.

Second electrode 103 may contain a conductive material for the purpose of enhancing electron conductivity.

Second electrode 103 may contain a binder.

As the conductive material and the binder, the same materials as the materials that can be used for active material layer 104 may be used.

Second electrode 103 may contain a non-aqueous electrolyte solution, a gel electrolyte, or an ionic liquid for the purpose of facilitating transfer of lithium ions and improving the output characteristics of the battery.

The non-aqueous electrolyte solution contains a non-aqueous solvent, and a lithium salt dissolved in the non-aqueous solvent. Examples of the non-aqueous solvent include cyclic carbonate ester solvents, chain carbonate ester solvents, cyclic ether solvents, chain ether solvents, cyclic ester solvents, chain ester solvents, and fluorine solvents. Examples of the cyclic carbonate ester solvent include ethylene carbonate, propylene carbonate, and butylene carbonate. Examples of the chain carbonate ester solvent include dimethyl carbonate, ethyl methyl carbonate, and diethyl carbonate. Examples of the cyclic ether solvent include tetrahydrofuran, 1,4-dioxane, and 1,3-dioxolane. Examples of the chain ether solvent include 1,2-dimethoxyethane and 1,2-diethoxyethane. Examples of the cyclic ester solvent include γ-butyrolactone. Examples of the chain ester solvent include methyl acetate. Examples of the fluorine solvent include fluoroethylene carbonate, methyl fluoropropionate, fluorobenzene, fluoroethyl methyl carbonate, and fluorodimethylene carbonate. One type of non-aqueous solvent selected from these solvents may be used singly. Alternatively, a mixture of two or more types of non-aqueous solvents selected from these solvents may be used.

Examples of the lithium salt include LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), and LiC(SO₂CF₃)₃. One type of lithium salt selected from these may be used singly. Alternatively, a mixture of two or more types of lithium salts selected from these may be used. The concentration of the lithium salt ranges, for example, from 0.5 mol/liter to 2 mol/liter, inclusive.

As the gel electrolyte, a polymer material impregnated with a non-aqueous electrolyte solution can be used. Examples of the polymer material include polyethylene oxide, polyacrylonitrile, polyvinylidene fluoride, polymethyl methacrylate, and polymers having an ethylene oxide bond.

Examples of the cation contained in the ionic liquid include:
(i) aliphatic chain quaternary salts such as tetraalkylammonium or tetraalkylphosphonium;
(ii) aliphatic cyclic ammoniums such as a pyrrolidinium, a morpholinium, an imidazolinium, a tetrahydropyrimidinium, piperazinium, or a piperidinium; and
(iii) nitrogen-containing heterocyclic aromatic cations such as a pyridinium or an imidazolium.

Examples of the anion contained in the ionic liquid include PF₆⁻, BF₄⁻, SbF₆⁻, AsF₆⁻, SO₃CF₃⁻, N(SO₂CF₃)₂⁻, N(SO₂C₂F₅)₂⁻, N(SO₂CF₃)(SO₂C₄F₉)⁻, and C(SO₂CF₃)₃⁻.

The ionic liquid may contain a lithium salt.

### [Separator]

Separator 107 has lithium ion conductivity. The material of separator 107 is not particularly limited, as long as lithium ions are allowed to pass through the material. The material of separator 107 may be at least one selected from the group consisting of solid electrolytes, gel electrolytes, ion exchange resin membranes such as a lithium cation exchange resin, semipermeable membranes, and porous membranes. When separator 107 is made of these materials, the safety of battery 1000 can be sufficiently ensured. Examples of the solid electrolyte include sulfide solid electrolytes such as Li₂S-P₂S₅, and oxide solid electrolytes such as Li₇La₃Zr₂O₁₂ (LLZ). Examples of the gel electrolyte include gel electrolytes containing a fluororesin such as PVdF. Examples of the ion exchange resin membrane include cation exchange membranes and anion exchange membranes. Examples of the porous membrane include a porous membrane made of a polyolefin resin and a porous membrane made of glass paper obtained by weaving glass fibers into a nonwoven fabric.

### [Exterior]

Exterior 108 is made of, for example, a material obtained by laminating a metal foil such as an aluminum foil with a resin film such as a polyethylene terephthalate (PET) film. Exterior 108 may be a container made of resin or metal.

In the above description, the configuration example in which first electrode 101 is a negative electrode and second electrode 103 is a positive electrode has been described. However, first electrode 101 may be a positive electrode and second electrode 103 may be a negative electrode.

When first electrode 101 is a positive electrode and second electrode 103 is a negative electrode, active material layer 104 is a positive electrode active material layer. That is, Bi contained in active material layer 104 functions as a positive electrode active material. In this case, second electrode 103 as a negative electrode is formed of, for example, lithium metal.

Battery 1000 has a basic configuration including first electrode 101, electrolyte solution 102, and second electrode 103, and is sealed in a sealed container to prevent air and moisture from entering therein. Examples of the shape of battery 1000 include a coin shape, a cylindrical shape, a square shape, a sheet shape, a button shape, a flat shape, and a laminated shape.

### Examples

Hereinafter, the details of the present disclosure will be disclosed using examples and reference examples. The following examples are illustrative, and the present disclosure is not limited to only the following examples.

### (Example 1)

### <Preparation of first electrode>

As a pretreatment, a nickel foil (10 cm × 10 cm, thickness: 10 µm) was preliminarily degreased with an organic solvent, and then one surface of the foil was masked. The foil was immersed in an acidic solvent to perform degreasing, thereby activating the surface of the nickel foil. A plating bath was prepared by adding bismuth methanesulfonate as a soluble bismuth salt to 1.0 mol/L methanesulfonic acid so that the concentration of Bi³⁺ ions was 0.18 mol/L. The activated nickel foil was connected to a power source so that a current can be applied thereto, and then immersed in the plating bath. Thereafter, the unmasked part of the nickel foil surface was electroplated with Bi so as to have a thickness of about 1 µm by controlling the current density to 2 A/dm². After the electroplating, the nickel foil was recovered from the acidic bath, the masking was removed, and the nickel foil was washed with pure water and dried. Thereafter, the nickel foil electroplated with Bi was heat-treated at 400°C for 60 hours in an electric furnace in an argon atmosphere. After the heat treatment, the Bi plating layer on the nickel foil was subjected to surface X-ray diffraction measurement. An X-ray diffraction pattern obtained by this measurement is as shown in Fig. 2. From this X-ray diffraction pattern, it was confirmed that BiNi having a monoclinic crystal structure belonging to a space group C2/m was generated. From the X-ray diffraction pattern, it was also confirmed that single-phase BiNi was formed on the nickel foil. That is, a laminate including a current collector formed of the nickel foil and an active material layer which was formed of the BiNi having the crystal structure belonging to the space group C2/m, and which was disposed in direct contact with the surface of the current collector, was obtained. A peak intensity ratio I(2)/I(1) of the active material layer calculated from this X-ray diffraction pattern was less than or equal to 0.28. Thereafter, the obtained laminate was punched into 2 cm × 2 cm to prepare a first electrode. The obtained first electrode had a thickness of 12 µm.

### <Preparation of test cell>

The first electrode was used as a working electrode. As a counter electrode, Li metal having a thickness of 0.34 mm was used. The working electrode corresponds to a negative electrode of a secondary battery. The Li metal was doubly coated with a microporous separator (Celgard 3401, Asahi Kasei Corporation). As an electrolyte solution, a solution in which LiPF₆ was dissolved in each solvent shown in Table 2 at a concentration of 1.0 mol/L was prepared. Batteries as test cells of Examples 1-1 to 1-9 were assembled using such a working electrode, a counter electrode, and an electrolyte solution. The test cells thus prepared are monopolar test cells including a working electrode and a counter electrode, and are used to test the performance of one of electrodes in a secondary battery. Specifically, an electrode to be tested is used as the working electrode, and an appropriate active material in a sufficient amount to cover the reaction of the working electrode is used for the counter electrode. Since these test cells were used to test the performance of the first electrode as a negative electrode, a large excess of Li metal was used as the counter electrode as is usually used. The negative electrode whose performance has been tested using such test cells can be used as a secondary battery, for example, by being combined with a positive electrode containing a positive electrode active material as described in the above exemplary embodiment, for example, a transition metal oxide containing Li.

**[Table 2]**

| | Solvent |
|---|---|
| Example 1-1 | vinylene carbonate (VC) |
| Example 1-2 | 2-methyltetrahydrofuran (2MeTHF) |
| Example 1-3 | fluoroethylene carbonate (FEC) |
| Example 1-4 | ethylene carbonate (EC) |
| Example 1-5 | propylene carbonate (PC) |
| Example 1-6 | methyl ethyl carbonate (MEC) |
| Example 1-7 | triglyme (3GM) |
| Example 1-8 | dimethyl carbonate (DMC) |
| Example 1-9 | solvent mixture of EC, MEC, and DMC (EC : MEC : DMC = 6 : 7 : 7 (volume ratio)) |
| Example 1-10 | solvent mixture of VC and MEC (VC : MEC = 1 : 1 (volume ratio)) |
| Example 1-11 | solvent mixture of VC and DMC (VC : DMC = 1 : 1 (volume ratio)) |
| Example 1-12 | solvent mixture of VC and diethyl carbonate (DEC) (VC : DEC = 1 : 1 (volume ratio)) |

### <Charge-discharge test>

A charge-discharge test was performed on the test cells. At a constant current value of 0.6 mA (0.15 mA/cm²), the test cells were charged up to 0 V, and discharged up to 2 V. This was defined as one cycle. The discharge cycle test was performed at 25°C.

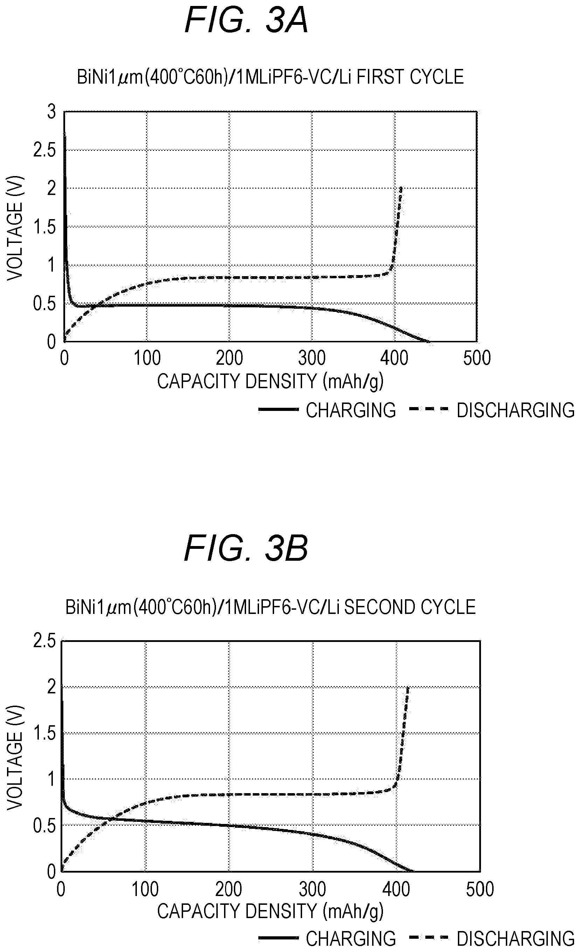

Fig. 3A is a graph showing the result of an initial charge-discharge test of the test cell according to Example 1-1. Fig. 3B is a graph showing the result of a second charge-discharge test of the test cell according to Example 1-1.

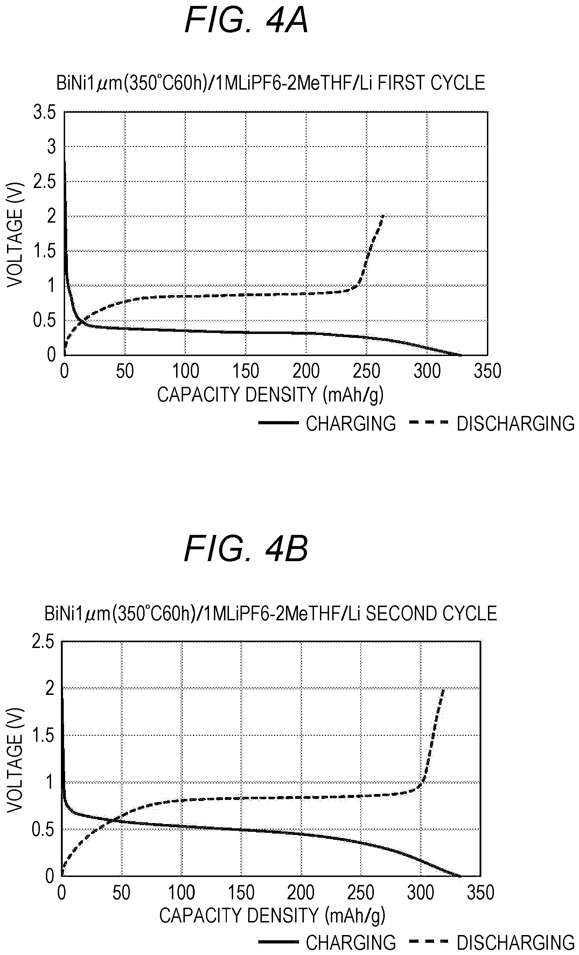

Fig. 4A is a graph showing the result of an initial charge-discharge test of the test cell according to Example 1-2. Fig. 4B is a graph showing the result of a second charge-discharge test of the test cell according to Example 1-2.

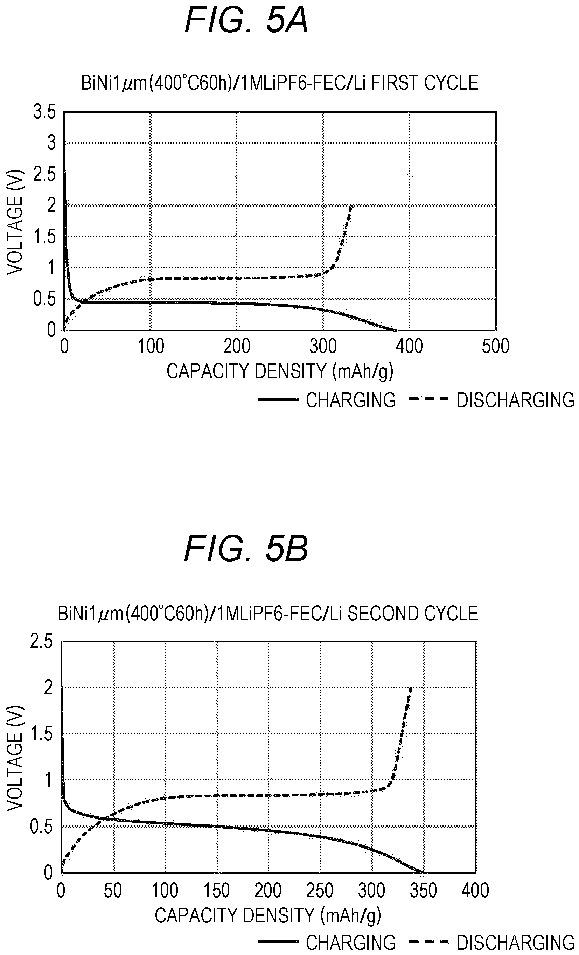

Fig. 5A is a graph showing the result of an initial charge-discharge test of the test cell according to Example 1-3. Fig. 5B is a graph showing the result of a second charge-discharge test of the test cell according to Example 1-3.

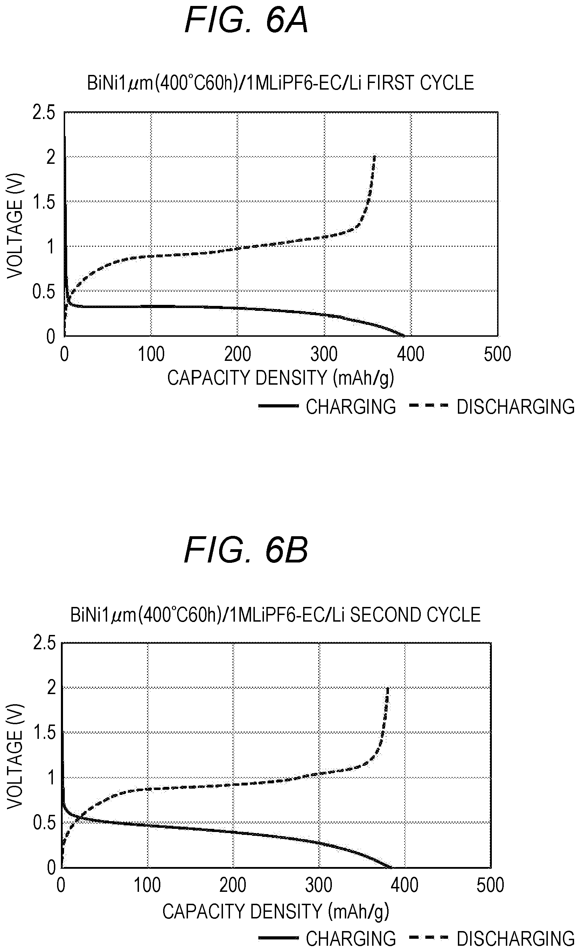

Fig. 6A is a graph showing the result of an initial charge-discharge test of the test cell according to Example 1-4. Fig. 6B is a graph showing the result of a second charge-discharge test of the test cell according to Example 1-4.

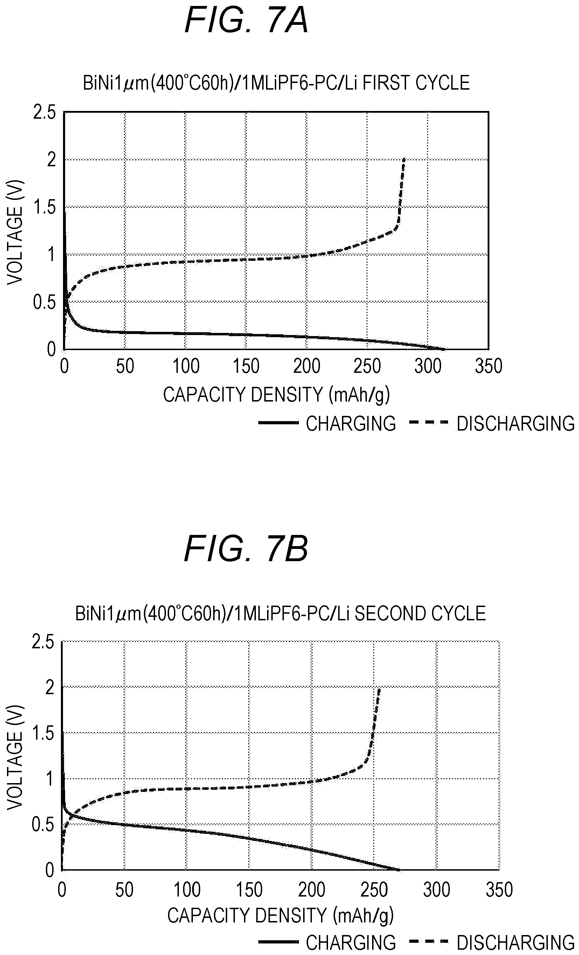

Fig. 7A is a graph showing the result of an initial charge-discharge test of the test cell according to Example 1-5. Fig. 7B is a graph showing the result of a second charge-discharge test of the test cell according to Example 1-5.

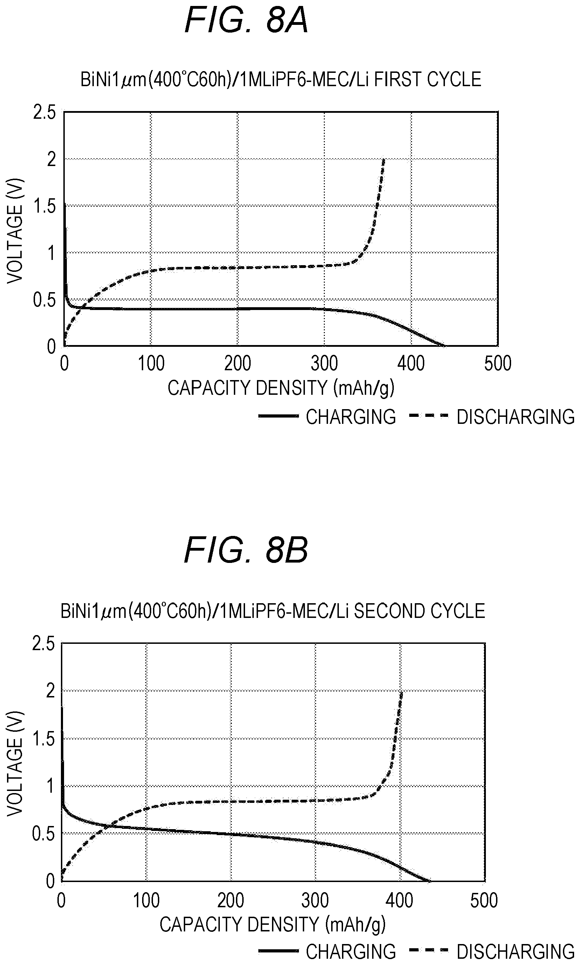

Fig. 8A is a graph showing the result of an initial charge-discharge test of the test cell according to Example 1-6. Fig. 8B is a graph showing the result of a second charge-discharge test of the test cell according to Example 1-6.

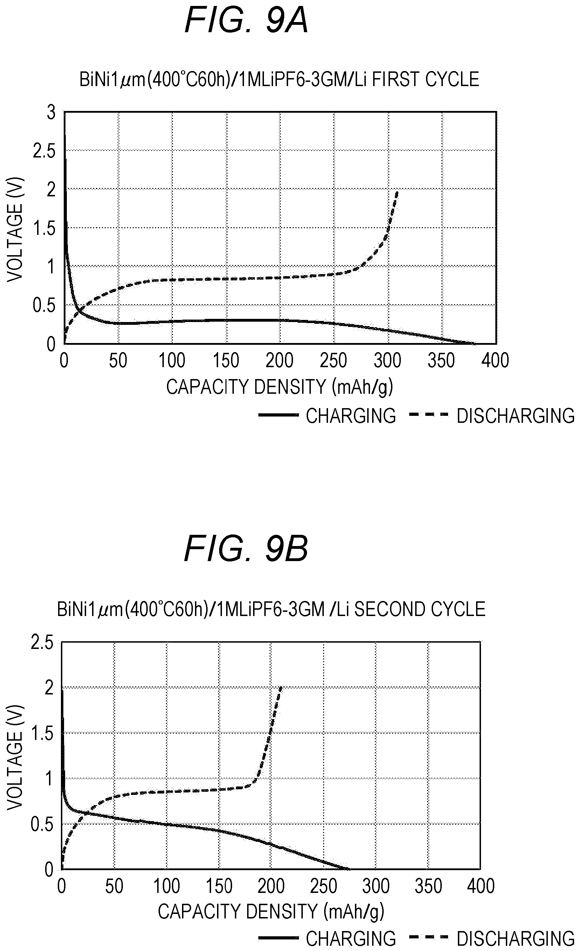

Fig. 9A is a graph showing the result of an initial charge-discharge test of the test cell according to Example 1-7. Fig. 9B is a graph showing the result of a second charge-discharge test of the test cell according to Example 1-7.

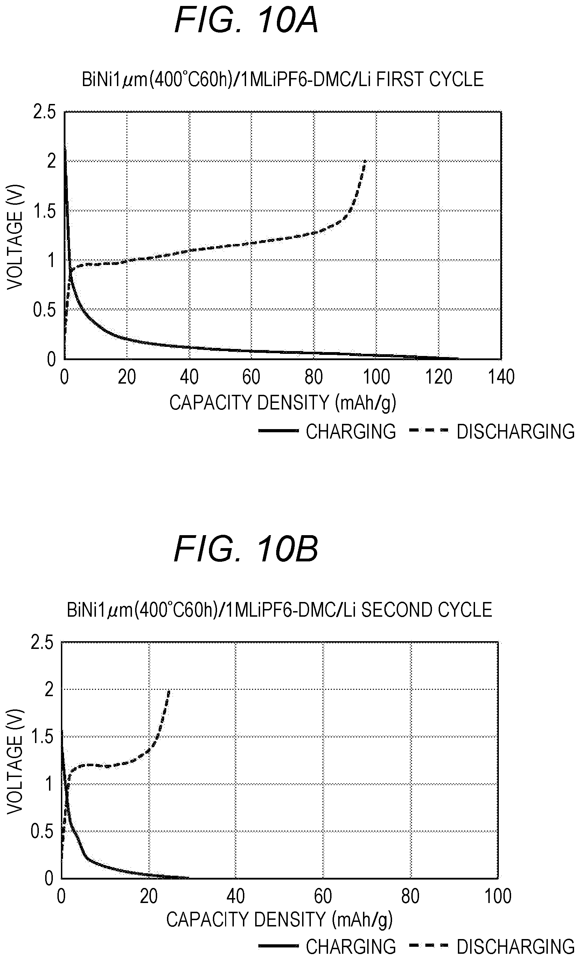

Fig. 10A is a graph showing the result of an initial charge-discharge test of the test cell according to Example 1-8. Fig. 10B is a graph showing the result of a second charge-discharge test of the test cell according to Example 1-8.

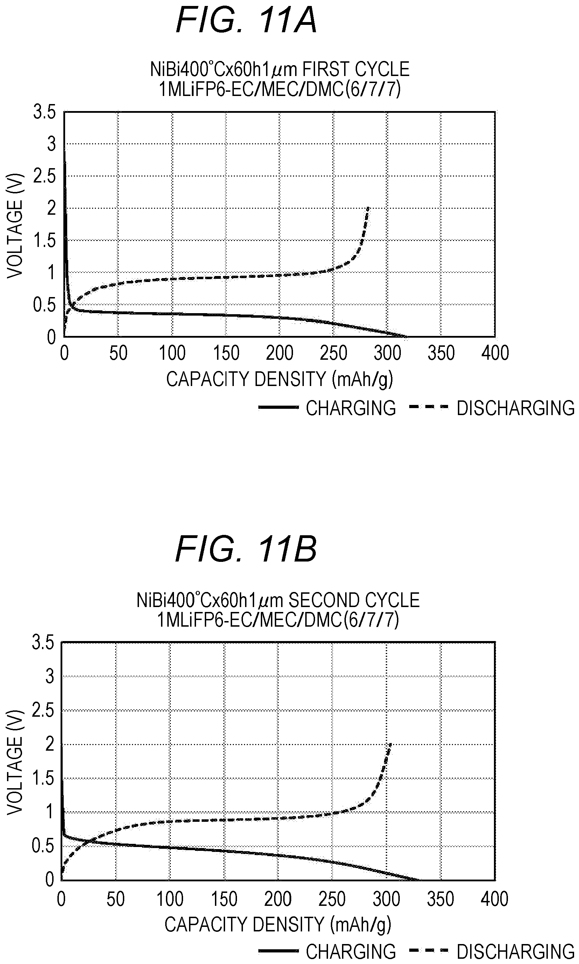

Fig. 11A is a graph showing the result of an initial charge-discharge test of the test cell according to Example 1-9. Fig. 11B is a graph showing the result of a second charge-discharge test of the test cell according to Example 1-9.

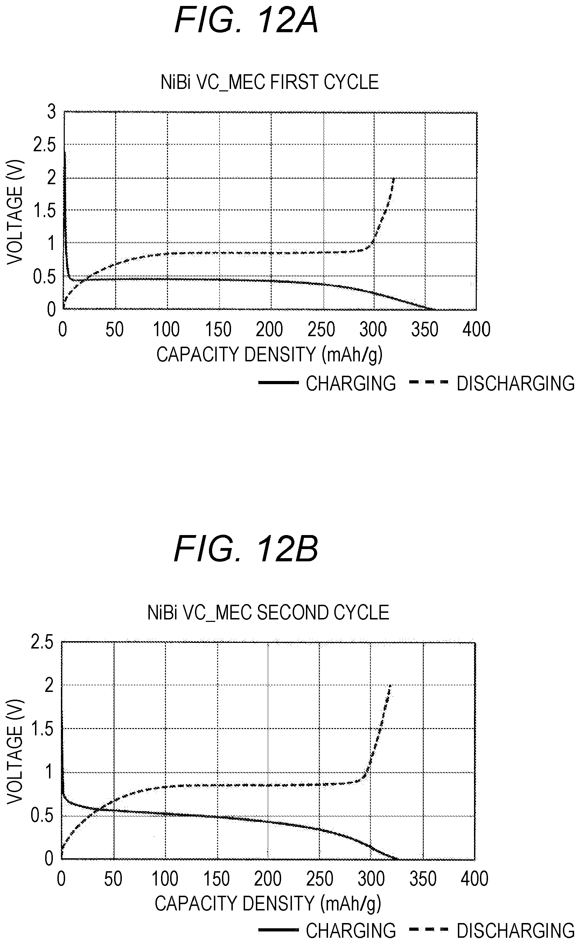

Fig. 12A is a graph showing the result of an initial charge-discharge test of the test cell according to Example 1-10. Fig. 12B is a graph showing the result of a second charge-discharge test of the test cell according to Example 1-10.

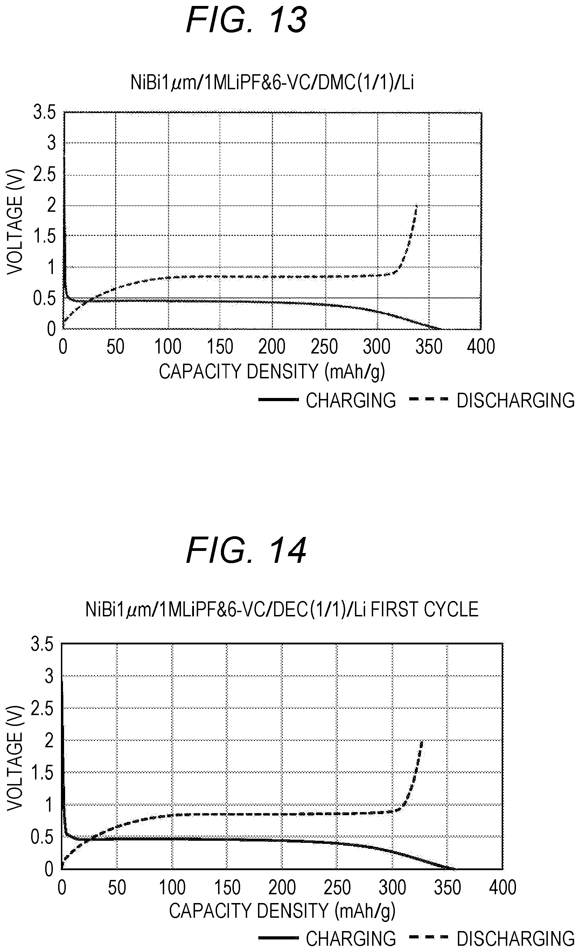

Fig. 13 is a graph showing the result of an initial charge-discharge test of the test cell according to Example 1-11.

Fig. 14 is a graph showing the result of an initial charge-discharge test of the test cell according to Example 1-12.

From the results of the charge-discharge tests of the test cells according to Examples 1-1 to 1-12, it was confirmed that the battery including the electrode containing the BiNi as an active material was excellent in discharge flatness. In the test cells of Examples 1-7 and 1-9, the second charge-discharge capacity decreased from the initial charge-discharge capacity, whereas in the test cells other than these test cells, the same level of charge-discharge capacity as that in the initial charge-discharge was obtained in the second charge-discharge as well.

### <Charge-discharge cycle test>

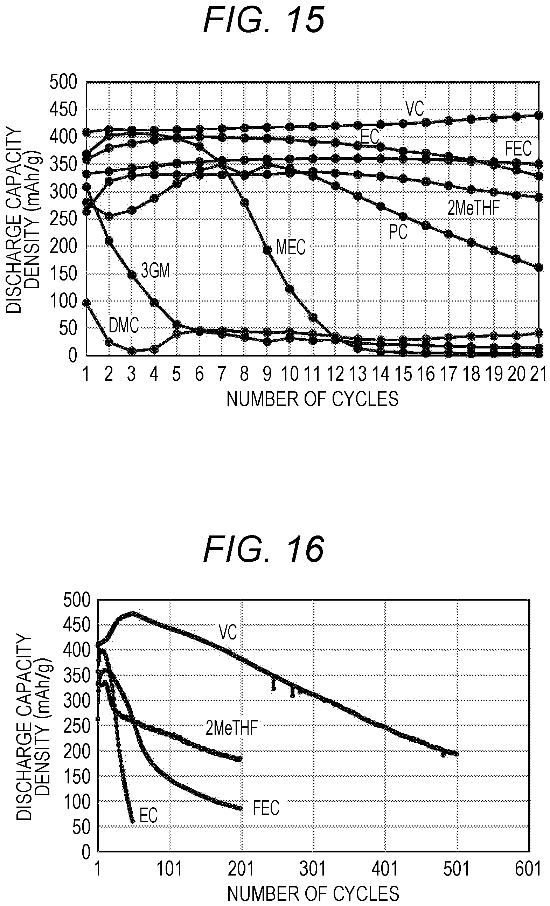

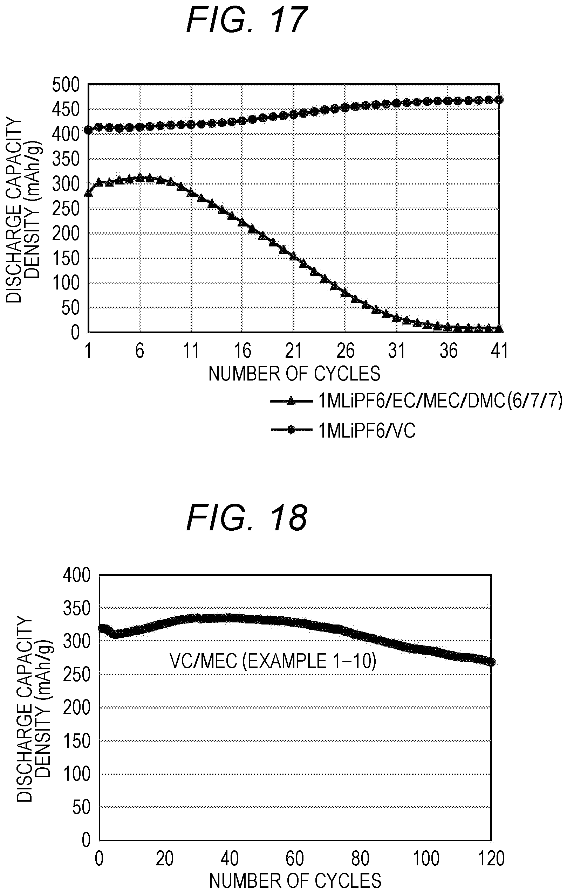

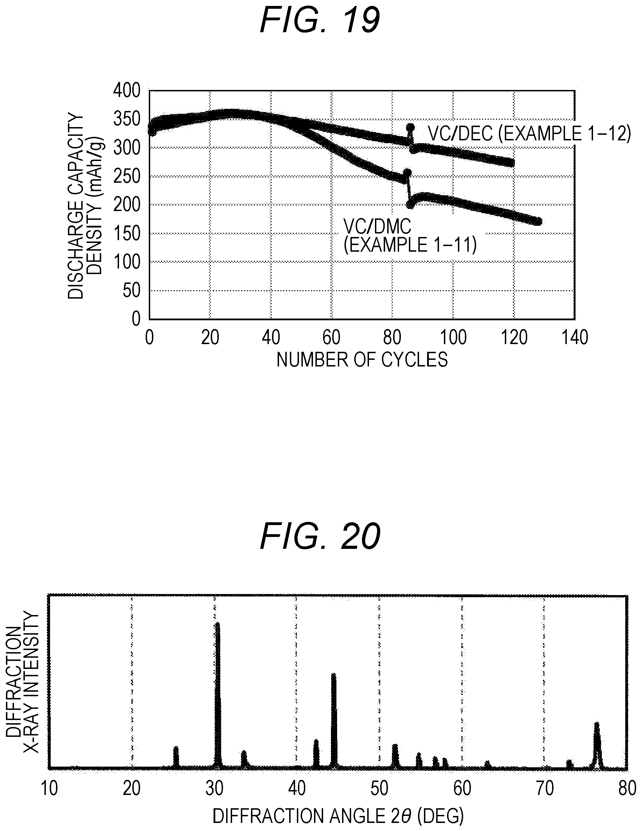

Under the same conditions as those in the charge-discharge test, the test cells were repeatedly charged and discharged with charging and discharging as one cycle, and cycle characteristics were evaluated. Fig. 15 is a graph showing a relationship between the number of cycles and the discharge capacity density of the test cells according to Examples 1-1 to 1-8. Fig. 16 is a graph showing a relationship between the number of cycles and the discharge capacity density of the test cells according to Examples 1-1 to 1-4. Fig. 17 is a graph showing a relationship between the number of cycles and the discharge capacity density of the test cells according to Examples 1-1 and 1-9. Fig. 18 is a graph showing a relationship between the number of cycles and the discharge capacity density of the test cell according to Example 1-10. Fig. 19 is a graph showing a relationship between the number of cycles and the discharge capacity density of the test cells according to Examples 1-11 and 1-12.

### <Evaluation of crystal structure of active material layer before charging, after charging, and after discharging>

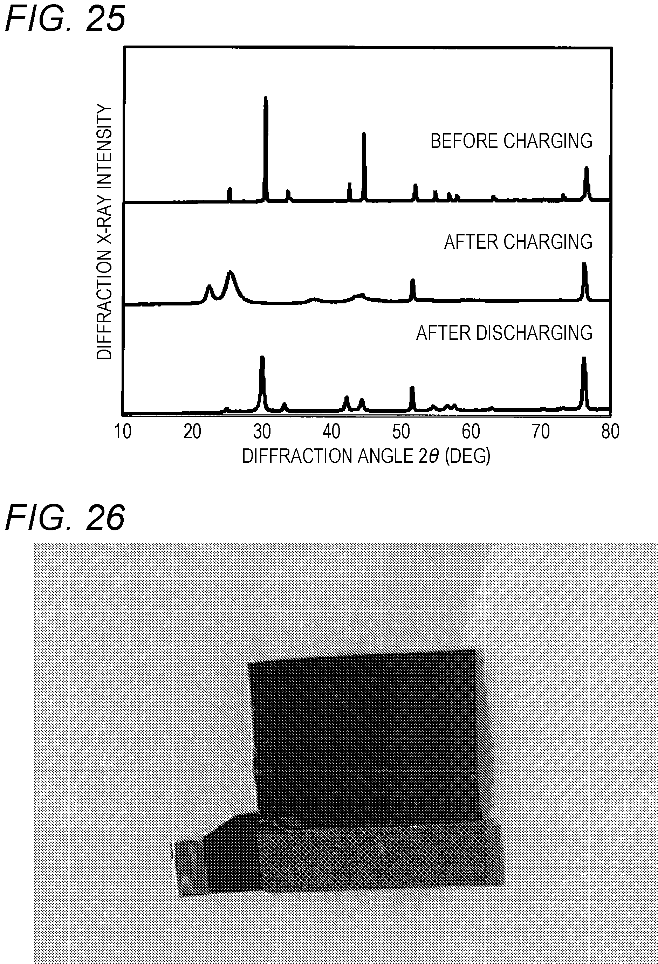

The surface X-ray diffraction measurement of the active material layer in the first electrode before charging, after charging, and after discharging was performed on the test cell of Example 1-1. Fig. 25 is a graph showing an example of X-ray diffraction patterns of the active material layer before charging, after charging, and after discharging in the test cell according to Example 1-1. According to Fig. 25, before charging, BiNi having a monoclinic crystal structure belonging to a space group C2/m and Ni having a cubic crystal structure belonging to a space group Fm-3m can be identified, and compounds derived from the active material and the current collector can be identified. After charging, Li₃Bi having a cubic crystal structure belonging to a space group Fm-3m and Ni having a cubic crystal structure belonging to a space group Fm-3m can be identified. That is, it was confirmed that Li₃Bi was generated after charging, and the charge reaction: BiNi + 3Li⁺ + 3e' → Li³Bi + Ni progressed. Furthermore, after charging and discharging, BiNi having a monoclinic crystal structure belonging to a space group C2/m and Ni having a cubic crystal structure belonging to a space group Fm-3m can be identified. It was confirmed that the charge-discharge reactions were reversible from the viewpoint of the configuration of the compounds before charging by the discharge reaction: Li₃Bi + Ni → BiNi + 3Li⁺ + 3e⁻.

### <Evaluation of electrode after charge-discharge cycle test>

For the test cell of Example 1-1 on which the above charge-discharge cycle test was performed, the electrode after 500 cycles was confirmed. Fig. 26 is a photograph of the first electrode in Example 1-1 after 500 cycles of charging and discharging. From the photograph of Fig. 26, it was confirmed that the first electrode in Example 1-1 did not collapse even after 500 cycles of charging and discharging, and was in a very clean state.

### (Example 2)

### <Preparation of first electrode>

In Example 2, a first electrode was prepared by the same method as in Example 1 except that the heat treatment conditions were changed from 400°C and 60 hours. In Example 2, after the heat treatment was performed at 250°C for 0.5 hours, the heat treatment was further performed at 350°C for 0.5 hours. In Example 2, after the heat treatment, the Bi plating layer on the nickel foil was also subjected to surface X-ray diffraction measurement similarly to Example 1. Fig. 20 is a graph showing an X-ray diffraction pattern of an active material layer formed of a BiNi thin film prepared on the nickel foil in Example 2. From this X-ray diffraction pattern, it was confirmed that BiNi having a monoclinic crystal structure belonging to a space group C2/m was generated. From the X-ray diffraction pattern, it was also confirmed that single-phase BiNi was formed on the nickel foil. That is, also in Example 2, a first electrode including a current collector formed of the nickel foil and an active material layer which was formed of the BiNi having the crystal structure belonging to the space group C2/m, and which was disposed in direct contact with the surface of the current collector, was obtained similarly to Example 1. A peak intensity ratio I(2)/I(1) of the active material layer calculated from this X-ray diffraction pattern was less than or equal to 0.28.

### <Preparation of test cell>

The first electrode of Example 2 was used as a working electrode, and a solution in which LiPF₆ was dissolved in VC at a concentration of 1.0 mol/L was used as an electrolyte solution. Except for these points, a test cell was prepared in the same manner as in Example 1.

### <Charge-discharge test>

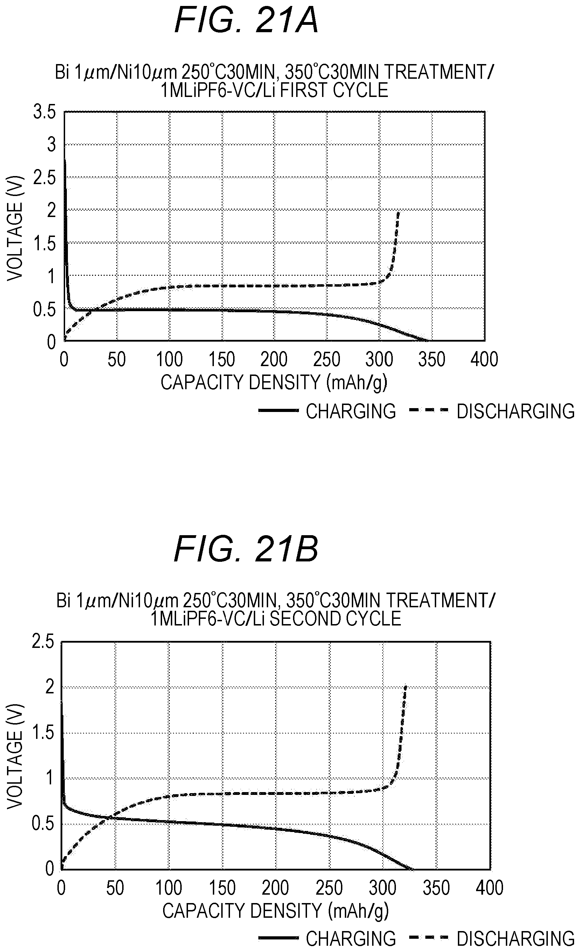

A charge-discharge test was performed on the test cells. The charge-discharge test was performed in the same manner as in Example 1. Fig. 21A is a graph showing the result of an initial charge-discharge test of the test cell according to Example 2. Fig. 21B is a graph showing the result of a second charge-discharge test of the test cell according to Example 2. From the results of the charge-discharge tests of the test cell according to Example 2, it was confirmed that the battery including the electrode containing the BiNi as an active material was excellent in discharge flatness. In the second charge-discharge, the same level of charge-discharge capacity as the initial charge-discharge capacity was obtained.

### <Charge-discharge cycle test>

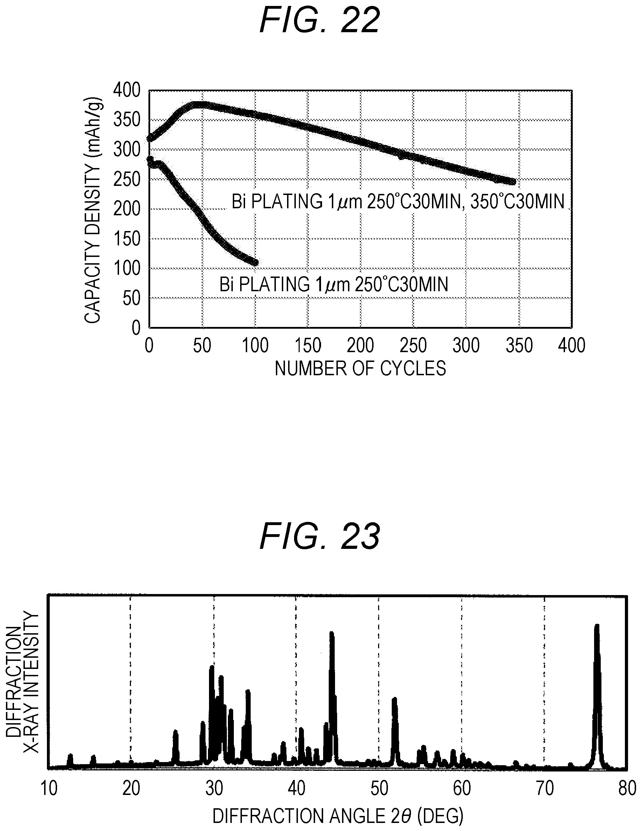

A charge-discharge cycle test was performed on the test cell. The discharge test was performed in the same manner as in Example 1. Fig. 22 is a graph showing a relationship between the number of cycles and the discharge capacity density of the test cell according to Example 2 and a test cell according to Example 3.

### (Example 3)

### <Preparation of first electrode>

In Example 3, a first electrode was prepared by the same method as in Example 1 except that the heat treatment conditions were changed from 400°C and 60 hours. In Example 3, the heat treatment was performed at 250°C for 0.5 hours. Also in Example 3, after the heat treatment, the Bi plating layer on the nickel foil was also subjected to surface X-ray diffraction measurement similarly to Example 1. Fig. 23 is a graph showing an X-ray diffraction pattern of an active material layer formed of a BiNi thin film prepared on the nickel foil in Example 3. From this X-ray diffraction pattern, two phases of BiNi having a monoclinic crystal structure belonging to a space group C2/m, BiNi having a monoclinic crystal structure belonging to a space group C2/m, and Bi₃Ni having an orthorhombic crystal structure belonging to a space group Pnma were confirmed. That is, in Example 3, a first electrode including a current collector formed of the nickel foil and an active material layer which containing the BiNi and Bi₃Ni, and which was disposed in direct contact with the surface of the current collector, was obtained.

### <Preparation of test cell>

The first electrode of Example 3 was used as a working electrode, and a solution in which LiPF₆ was dissolved in VC at a concentration of 1.0 mol/L was used as an electrolyte solution. Except for these points, a test cell was prepared in the same manner as in Example 1.

### <Charge-discharge test>

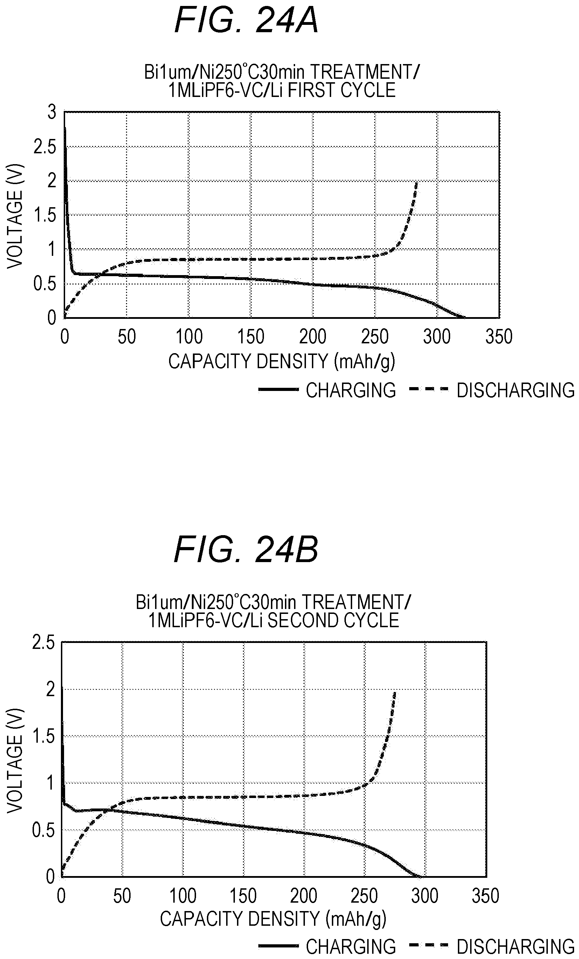

A charge-discharge test was performed on the test cells. The charge-discharge test was performed in the same manner as in Example 1. Fig. 24A is a graph showing the result of an initial charge-discharge test of the test cell according to Example 3. Fig. 24B is a graph showing the result of a second charge-discharge test of the test cell according to Example 3. From the results of the charge-discharge tests of the test cell according to Example 3, it was confirmed that the battery including the electrode containing the BiNi as an active material was excellent in discharge flatness. In the second charge-discharge, the same level of charge-discharge capacity as the initial charge-discharge capacity was obtained.

### <Charge-discharge cycle test>

A charge-discharge cycle test was performed on the test cell. The discharge test was performed in the same manner as in Example 1. Fig. 22 is a graph showing a relationship between the number of cycles and the discharge capacity density of the test cell according to Example 2 and a test cell according to Example 3.

### (Example 4)

### <Preparation of first electrode>

As a powder material, Bi₂O₃ (Bismuth trioxide "BIO10PB", manufactured by Kojundo Chemical Lab. Co., Ltd.), NiO (Nickel monoxide "NIO04PB", manufactured by Sumitomo Metal Mining Co., Ltd.), and carbon (DENKA BLACK, manufactured by Denka Company Limited) were mixed in a mortar. The molar ratio of Bi₂O₃, NiO, and carbon was 2 : 4 : 5 (Bi₂O₃ : NiO : carbon). The obtained mixture was sintered in a nitrogen atmosphere using an electric furnace to prepare a BiNi powder. The sintering was performed at 800°C for 4 hours.

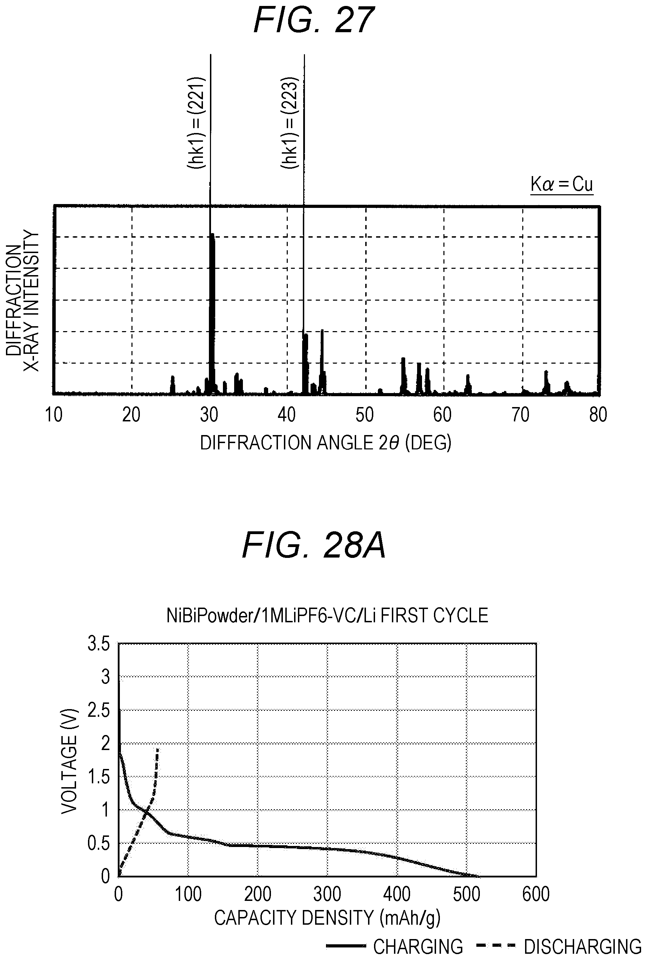

Fig. 27 is a graph showing an X-ray diffraction pattern of the BiNi powder prepared from the powder material in Example 4. The X-ray diffraction pattern was measured after the sintered BiNi powder was crushed in a mortar. The measurement was performed by the θ-2θ method using Cu-Ka rays having wavelengths of 1.5405 Å and 1.5444 Å as X-rays, by use of an X-ray diffractometer (MiNi Flex, manufactured by Rigaku Corporation). From the obtained X-ray diffraction pattern, it was confirmed that BiNi was generated and the BiNi had a monoclinic crystal structure belonging to a space group C2/m. For the obtained powder, it was confirmed that most of the powder was BiNi, but Bi₃Ni and Ni were also present. From this X-ray diffraction pattern, it was also confirmed that a peak intensity ratio I(2)/I(1) exceeded 0.28 in an active material layer of a first electrode according to Example 4.

The obtained BiNi powder and acetylene black (AB) ("DENKA BLACK", manufactured by Denka Company Limited) as a conductive agent were dispersed in an N-methyl-2-pyrrolidone (NMP) solution of PVdF to prepare a slurry. PVdF was used as a binder. In this slurry, the mass ratio of BiNi powder, AB, and PVdF was 8 : 1 : 1 (BiNi powder : AB : PVdF). After this slurry was applied onto a nickel foil (10 cm × 10 cm), the NMP as a solvent was removed, and the nickel foil was molded and punched into 2 cm × 2 cm to obtain a first electrode.

### <Preparation of test cell>

The first electrode of Example 4 was used as a working electrode, and a solution in which LiPF₆ was dissolved in VC or a solvent mixture at a concentration of 1.0 mol/L was used as an electrolyte solution. Except for these points, a test cell was prepared in the same manner as in Example 1. The test cell in which VC was used as the solvent of the electrolyte solution was used as a test cell according to Example 4-1. As the solvent mixture, a solvent obtained by mixing EC, MEC, and DMC at a volume ratio of 6 : 7 : 7 (EC : MEC : DMC) was used. The test cell in which this solvent mixture was used as the solvent of the electrolyte solution was used as a test cell according to Example 4-2.

### <Charge-discharge test>

A charge-discharge test was performed on the test cells. At a constant current value of 0.6 mA (0.15 mA/cm²), the test cells were charged up to 0 V, and discharged up to 2 V. This was defined as one cycle. The charge-discharge cycle test was performed at 25°C.

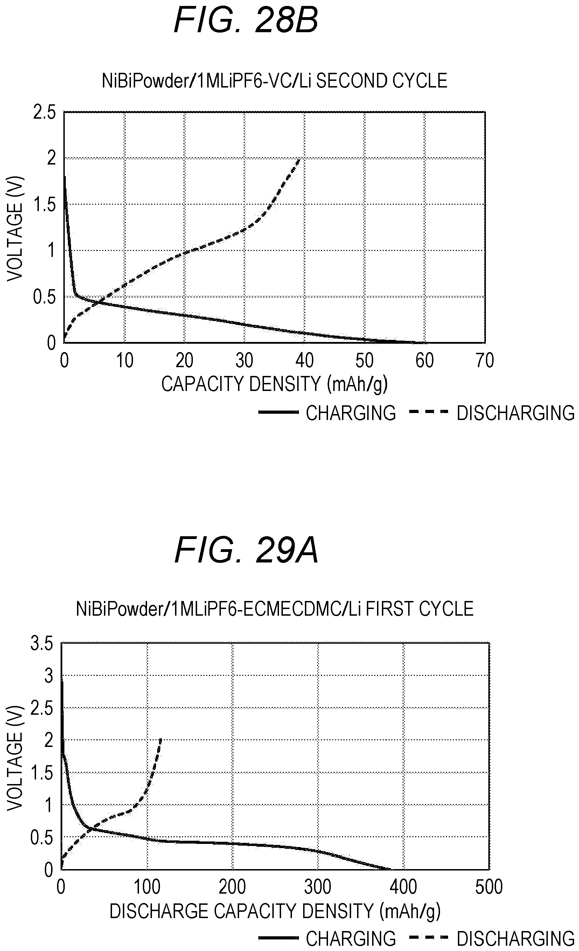

Fig. 28A is a graph showing the result of an initial charge-discharge test of the test cell according to Example 4-1. Fig. 28B is a graph showing the result of a second charge-discharge test of the test cell according to Example 4-1.

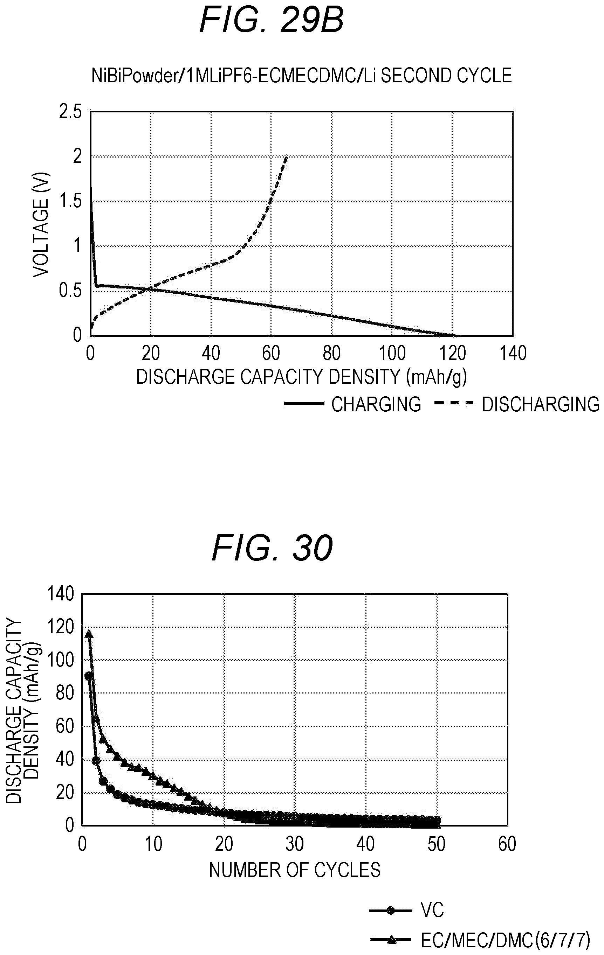

Fig. 29A is a graph showing the result of an initial charge-discharge test of the test cell according to Example 4-2. Fig. 29B is a graph showing the result of a second charge-discharge test of the test cell according to Example 4-2.

### <Charge-discharge cycle test>

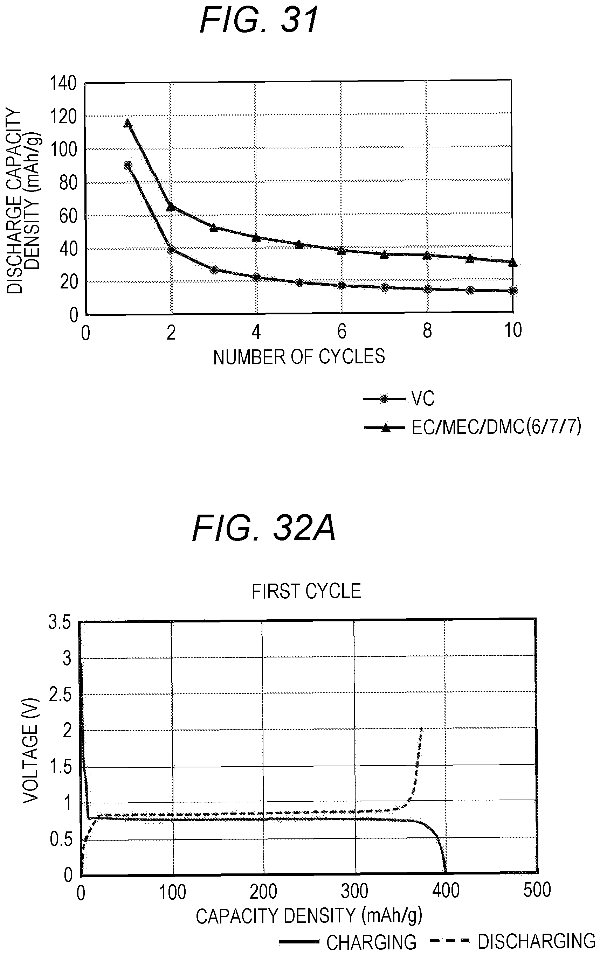

Under the same conditions as those in the charge-discharge test, the test cells were repeatedly charged and discharged with charging and discharging as one cycle, and cycle characteristics were evaluated. Fig. 30 is a graph showing a relationship between the number of cycles up to 50 cycles and the discharge capacity density of the test cells according to Examples 4-1 and 4-2. Fig. 31 is a graph showing a relationship between the number of cycles up to 10 cycles and the discharge capacity density of the test cells according to Examples 4-1 and 4-2.

### (Reference Example 1)

### <Preparation of first electrode>

As a pretreatment, a copper foil was preliminarily degreased with an organic solvent, and then one surface of the foil was masked. The foil was immersed in an acidic solvent to perform degreasing, thereby activating the surface of the copper foil. A plating bath was prepared by adding bismuth methanesulfonate as a soluble bismuth salt to 1.0 mol/L methanesulfonic acid so that the concentration of Bi³⁺ ions was 0.18 mol/L. The activated copper foil was connected to a power source so that a current can be applied thereto, and then immersed in the plating bath. Thereafter, the unmasked part of the copper foil surface was electroplated with Bi so as to have a thickness of about 1 µm by controlling the current density to 2 A/dm². After the electroplating, the copper foil was recovered from the acidic bath, and the masking was removed. Then, the copper foil was washed with pure water, dried, and punched into a size of 2 cm × 2 cm to obtain a first electrode. That is, the first electrode of Reference Example 1 had a configuration in which an active material layer formed of a Bi plating layer was provided on a current collector made of a copper foil.

### <Preparation of test cell>

The first electrode of Reference Example 1 was used as a working electrode, and a solution in which LiPF₆ was dissolved in VC at a concentration of 1.0 mol/L was used as an electrolyte solution. Except for these points, a test cell was prepared in the same manner as in Example 1.

### <Charge-discharge test>

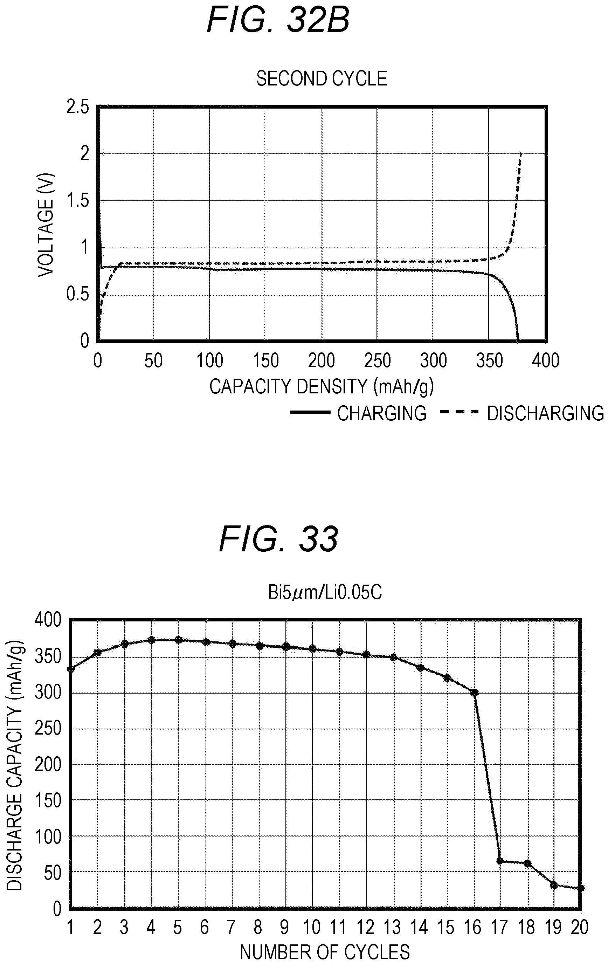

A charge-discharge test was performed on the test cells. The charge-discharge test was performed in the same manner as in Example 1. Fig. 32A is a graph showing the result of an initial charge-discharge test of the test cell according to Reference Example 1. Fig. 32B is a graph showing the result of a second charge-discharge test of the test cell according to Reference Example 1. From Figs. 32A and 32B, the battery according to Reference Example 1 in which the Bi plating layer was used for the active material layer was excellent in discharge flatness, and furthermore, the charge-discharge capacity was substantially maintained in the second charge-discharge.

### <Charge-discharge cycle test>

A charge-discharge cycle test was performed on the test cell. The discharge test was performed in the same manner as in Example 1. Fig. 33 is a graph showing a relationship between the number of cycles and the discharge capacity density of the test cell according to Reference Example 1. By comparing the number of cycles shown in Fig. 33 with the number of cycles shown in Figs. 15 and 16 of the cell of Example 1-1, in which the same electrolyte solution was used, it was confirmed that the battery including the first electrode containing the BiNi as an active material had more excellent charge-discharge cycle characteristics than the battery including the first electrode containing the Bi as an active material.

### (Comparative Example 1)

### <Preparation of first electrode>

A Bi powder (purity 3N fine powder, particle diameter: about 1 µm to 2 µm, manufactured by Kojundo Chemical Laboratory Co., Ltd.) and AB ("DENKA BLACK", manufactured by Denka Company Limited) as a conductive agent were dispersed in an NMP solution of PVdF to prepare a slurry. PVdF was used as a binder. In this slurry, the mass ratio of Bi powder, AB, and PVdF was 8 : 1 : 1 (Bi powder : AB : PVdF). After this slurry was applied onto a copper foil (10 cm × 10 cm), the NMP as a solvent was removed, and the copper foil was molded and punched into 2 cm × 2 cm to prepare a first electrode.

### <Preparation of test cell>

A test cell was assembled in the same manner as in Example 1 except that the first electrode prepared in Comparative Example 1 was used.

### <Charge-discharge test>

A charge-discharge test was performed on the test cells. At a constant current value of 0.6 mA (0.15 mA/cm²), the test cells were charged up to 0 V, and discharged up to 2 V. This was defined as one cycle. The charge-discharge cycle test was performed at 25°C.

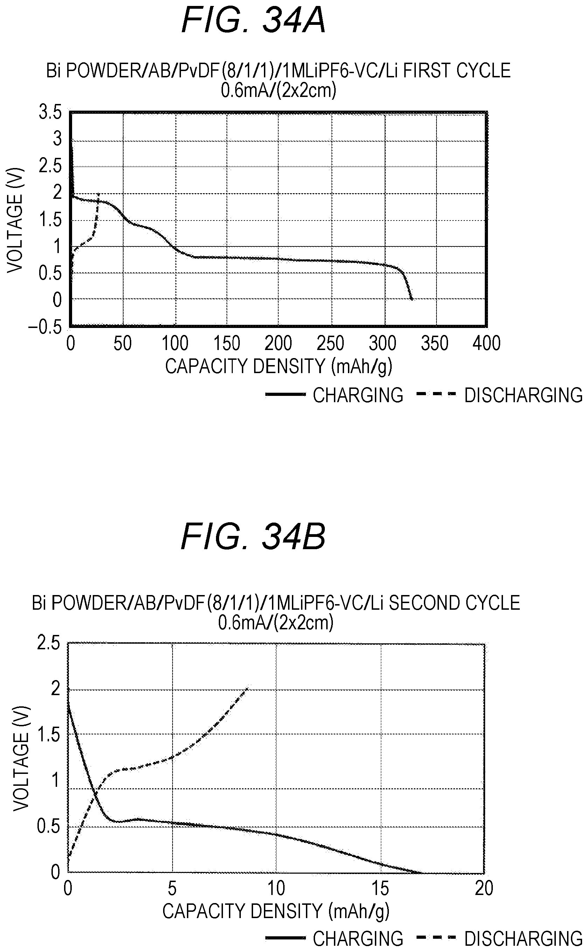

Fig. 34A is a graph showing the result of an initial charge-discharge test of the test cell according to Comparative Example 1. Fig. 34B is a graph showing the result of a second charge-discharge test of the test cell according to Comparative Example 1. From Figs. 34A and 34B, the battery according to Comparative Example 1 in which the Bi powder was used for the active material layer had very poor initial charge-discharge characteristics, and the second charge-discharge capacity further decreased.

### <Charge-discharge cycle test>

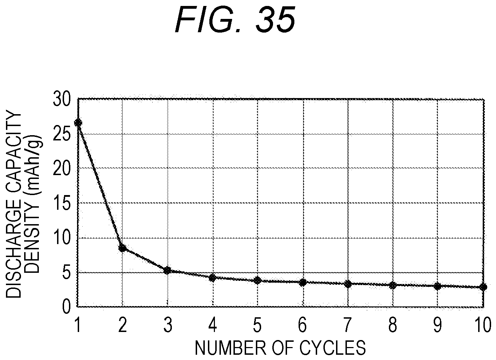

Under the same conditions as those in the charge-discharge test, the test cells were repeatedly charged and discharged with charging and discharging as one cycle, and cycle characteristics were evaluated. Fig. 35 is a graph showing a relationship between the number of cycles up to 10 cycles and the discharge capacity density of the test cell according to Comparative Example 1. From the results shown in Fig. 35, the battery according to Comparative Example 1 in which the Bi powder was used for the active material layer had very poor cycle characteristics.

The battery including the first electrode containing the BiNi in Examples 1 to 4 had improved cycle characteristics as compared with the battery including the first electrode containing the Bi. In particular, the batteries of Examples 1 to 3 in which the active material layer containing the BiNi had high orientation such that I(2)/I(1) satisfied less than or equal to 0.28 had more excellent cycle characteristics. In addition, for example, as shown in Fig. 15, it was confirmed that the cycle characteristics were further improved when the solvent of the electrolyte solution contained at least one selected from the group consisting of VC, 2MeTHF, FEC, and EC. In addition, according to Figs. 15, 18, and 19, the batteries according to Examples 1-10, 1-11, and 1-12 in which the electrolyte solution containing the solvent mixture of vinylene carbonate and chain carbonate was used had more excellent cycle characteristics than the batteries according to Examples 1-6 and 1-8 in which the electrolyte solution containing only one type of chain carbonate as a solvent was used.

### INDUSTRIAL APPLICABILITY

The battery of the present disclosure can be used as, for example, an all-solid lithium secondary battery.

### REFERENCE MARKS IN THE DRAWINGS

1000: battery
100: current collector
101: first electrode
102: electrolyte solution
103: second electrode
104: active material layer
105: current collector
106: active material layer
107: separator
108: exterior

## Claims

1. A battery comprising:
a first electrode;
a second electrode; and
an electrolyte solution,
wherein the first electrode includes a current collector and an active material layer,
the active material layer contains BiNi, and
the BiNi has a crystal structure, a space group of the crystal structure belonging to C2/m.

2. The battery according to Claim 1, wherein
in an X-ray diffraction pattern of the active material layer obtained by surface X-ray diffraction measurement using a Cu-Ka ray, an intensity ratio I(2)/I(1) of an intensity I(2) to an intensity I(1) is less than or equal to 0.28,
where
the intensity I(1) is a height intensity of a maximum peak present in a range of a diffraction angle 2θ of from 29° to 31°, inclusive, and
the intensity I(2) is a height intensity of a maximum peak present in a range of a diffraction angle 2θ of from 41° to 43°, inclusive.

3. The battery according to any one of Claim 1 or 2, wherein
the active material layer contains at least one selected from the group consisting of LiBi and Li₃Bi.

4. The battery according to any one of Claims 1 to 3, wherein
the active material layer contains no solid electrolyte.

5. The battery according to any one of Claims 1 to 4, wherein
the active material layer contains the BiNi as a main component of an active material.

6. The battery according to Claim 5, wherein
the active material layer contains substantially only the BiNi as the active material.

7. The battery according to any one of Claims 1 to 6, wherein
the current collector contains Ni.

8. The battery according to any one of Claims 1 to 7, wherein
the active material layer is a heat-treated plating layer.

9. The battery according to any one of Claims 1 to 8, wherein
the electrolyte solution contains an aprotic solvent and a lithium salt which is dissolved in the aprotic solvent.

10. The battery according to Claim 9, wherein
the aprotic solvent contains at least one selected from the group consisting of vinylene carbonate, 2-methyltetrahydrofuran, fluoroethylene carbonate, and ethylene carbonate.

11. The battery according to Claim 9, wherein
the aprotic solvent contains vinylene carbonate and chain carbonate.

12. The battery according to any one of Claims 1 to 11, wherein
the first electrode is a negative electrode, and
the second electrode is a positive electrode.
